# EUROPEAN PATENT APPLICATION

(11) **EP 4 496 387 A1**
(43) Date of publication of application: **22.01.2025**
(21) Application number: 23771141.1
(22) Date of filing: 17.03.2023
(51) Int. Cl.: H04W 52/02, H04W 84/12, H04W 74/00

(54) **METHOD AND APPARATUS FOR RESCHEDULING TARGET WAKE TIME SERVICE PERIOD IN WIRELESS LAN SYSTEM**

(30) Priority: 17.03.2022 KR 20220033514; 28.03.2022 KR 20220038260
(71) Applicant: LG Electronics Inc., Yeongdeungpo-gu Seoul 07336 (KR)
(72) Inventor: BAEK, Sunhee, Seoul 06772 (KR); JANG, Insun, Seoul 06772 (KR); CHOI, Jinsoo, Seoul 06772 (KR); KIM, Jiin, Seoul 06772 (KR)
(74) Representative: Frenkel, Matthias Alexander
(86) International application number: PCT/KR2023/003594
(87) International publication number: WO 2023/177262

(57) **Abstract**

A method and an apparatus for rescheduling a target wake time (TWT) service period (SP) in a wireless LAN system are disclosed. The method performed by a station (STA) in a wireless LAN system, according to one embodiment of the present disclosure, comprises the steps of: establishing an agreement related to a restricted target wake time (r-TWT); and transmitting, to one or more other STAs, at least one frame including a TWT information field. Here, the TWT information field can include an r-TWT-related subfield, all TWT subfields, and the next TWT subfield, and rescheduling-related information about the r-TWT SP scheduled for the STA can be indicated on the basis of the r-TWT-related subfield, all the TWT subfields, and the next TWT subfield.

## Description

### [Technical Field]

The present disclosure relates to a target wake time (TWT) operation in a wireless local area network (WLAN) system, and more particularly, to a method and a device related to rescheduling of restricted-TWT service period in a next-generation WLAN system.

### [Background Art]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more improved wireless communication environment, an enhancement technologies for EHT (Extremely High Throughput) are being discussed. For example, technologies for multiple access point (AP) coordination and multiple input multiple output (MIMO) supporting an increased bandwidth, efficient utilization of multiple bands and increased spatial streams are being studied, and, in particular, various technologies for supporting low latency or real-time traffic are being studied. Furthermore, new technologies are being discussed to support ultra high reliability (UHR), including improvements or expansions of EHT technology.

### [Disclosure]

### [Technical Problem]

A technical problem of the present disclosure is to provide a method and a device for transmitting latency sensitive traffic in a WLAN system.

An additional technical object of the present disclosure is to provide a method and device related to suspension and/or resumption of a restricted TWT service period (SP) in a wireless LAN system.

An additional technical object of the present disclosure is to provide a method and a device of requesting or indicating extension for an end point of a restricted TWT SP in a WLAN system.

The technical objects to be achieved by the present disclosure are not limited to the above-described technical objects, and other technical objects which are not described herein will be clearly understood by those skilled in the pertinent art from the following description.

### [Technical Solution]

A method performed by a station (STA) in a wireless LAN system according to an aspect of the present disclosure may include: establishing an agreement related to restrictedtarget wake time (r-TWT); and transmitting at least one frame including a TWT information field to one or more other STAs. Herein, the TWT information field may include an r-TWT related subfield, an all TWT subfield, and a next TWT subfield, and re-scheduling related information on a r-TWT service period (r-TWT SP) scheduled for the STA may be indicated based on the r-TWT related subfield, the all TWT subfields, and the next TWT subfield.

### [Advantageous Effects]

According to the present disclosure, a method and a device for transmitting latency sensitive traffic in a WLAN system may be provided.

According to the present disclosure, a method and device related to suspension and/or resumption of a restricted TWT service period (SP) in a wireless LAN system may be provided.

According to the present disclosure, a method and a device of requesting or indicating extension for an end point of a restricted TWT SP in a WLAN system may be provided.

Effects achievable by the present disclosure are not limited to the above-described effects, and other effects which are not described herein may be clearly understood by those skilled in the pertinent art from the following description.

### [Description of Drawings]

The accompanying drawings, which are included as part of the detailed description to aid understanding of the present disclosure, provide embodiments of the present disclosure and together with the detailed description describe technical features of the present disclosure.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for explaining a link setup process to which the present disclosure may be applied.
FIG. 4 is a diagram for explaining a backoff process to which the present disclosure may be applied.
FIG. 5 is a diagram for explaining a frame transmission operation based on CSMA/CA to which the present disclosure may be applied.
FIG. 6 is a diagram for explaining an example of a frame structure used in a WLAN system to which the present disclosure may be applied.
FIG. 7 is a diagram illustrating examples of PPDUs defined in the IEEE 802.11 standard to which the present disclosure may be applied.
FIGs. 8 to 10 are diagrams for explaining examples of resource units of a WLAN system to which the present disclosure may be applied.
FIG. 11 illustrates an example structure of a HE-SIG-B field.
FIG. 12 is a diagram for explaining a MU-MIMO method in which a plurality of users/STAs are allocated to one RU.
FIG. 13 illustrates an example of a PPDU format to which the present disclosure may be applied.
FIG. 14 is a diagram for describing an example of an individual TWT operation to which the present disclosure may be applied.
FIG. 15 is a diagram for describing an example of a broadcast TWT operation to which the present disclosure may be applied.
FIG. 16 is a diagram for describing an example of a TWT information field format.
FIG. 17 is a diagram for describing an example of a TWT information element format.
FIG. 18 is a diagram for describing examples of an individual TWT parameter set field format.
FIG. 19 is a diagram for describing examples of a broadcast TWT parameter set field format.
FIG. 20 is a diagram for describing an example of a restricted TWT operation.
FIG. 21 illustrates an example of an r-TWT related information frame according to the present disclosure.
FIG. 22 illustrates an example of a restricted TWT operation based on an r-TWT information frame according to the present disclosure.
FIG. 23 illustrates another example of a restricted TWT operation based on an r-TWT information frame according to the present disclosure.
FIG. 24 illustrates the other example of an r-TWT related information frame according to the present disclosure.
FIG. 25 illustrates another example of an r-TWT related information frame according to the present disclosure.
FIG. 26 illustrates the other example of an r-TWT related information frame according to the present disclosure.
FIG. 27 illustrates the other example of an r-TWT related information frame according to the present disclosure.
FIG. 28 illustrates an example of restricted TWT operation considering the extended r-TWT SP according to the present disclosure.
FIG. 29 illustrates another example of restricted TWT operation considering the extended r-TWT SP according to the present disclosure.
FIG. 30 is a diagram for explaining the operation of an STA supporting rescheduling of an r-TWT SP according to an embodiment of the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

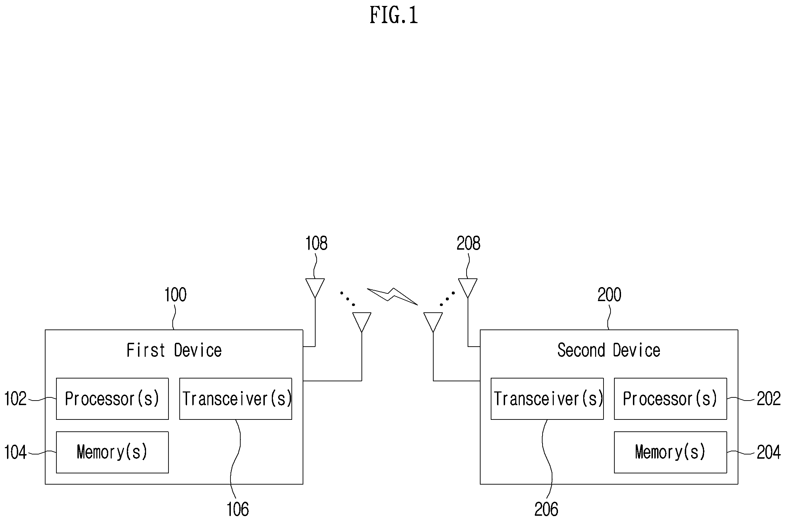

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5GNR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) Determining / acquiring / configuring / calculating / decoding / encoding bit information of fields (signal (SIG), short training field (STF), long training field (LTF), Data, etc.) included in the PPDU, 2) Determining / configuring / acquiring time resources or frequency resources (e.g., subcarrier resources) used for fields (SIG, STF, LTF, Data, etc.) included in the PPDU; 3) Determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

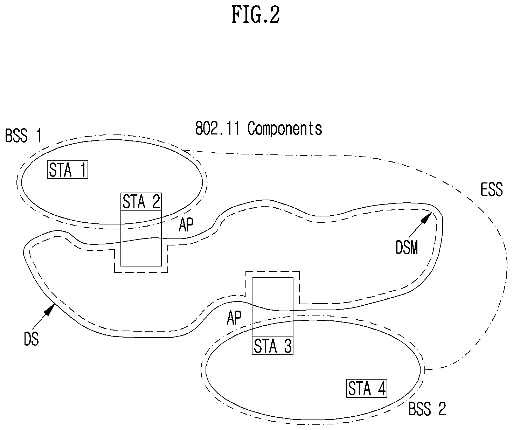

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form contaning only two STAs. For example, assuming that other components are omitted, BSS1 contaning only STA1 and STA2 or BSS2 contaning only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

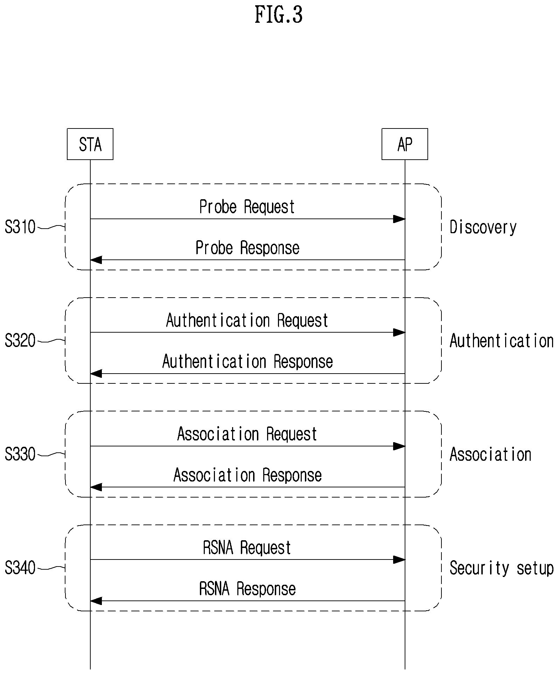

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

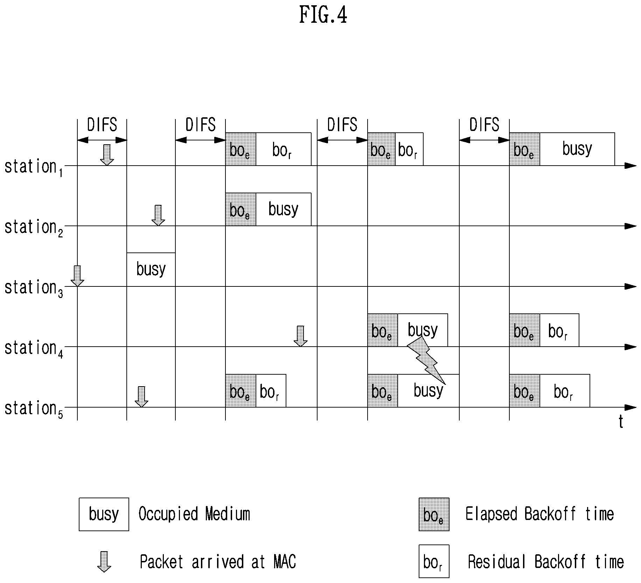

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2n-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STAS, and each STA waits as long as DIPS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STAS. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STAS, waits for DIPS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

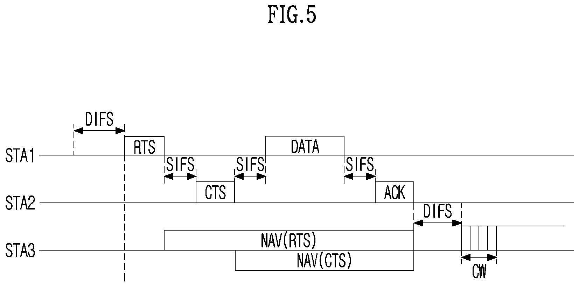

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

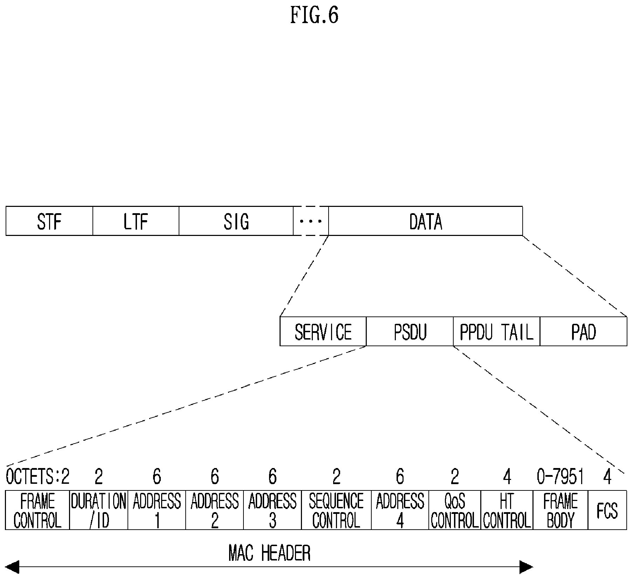

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

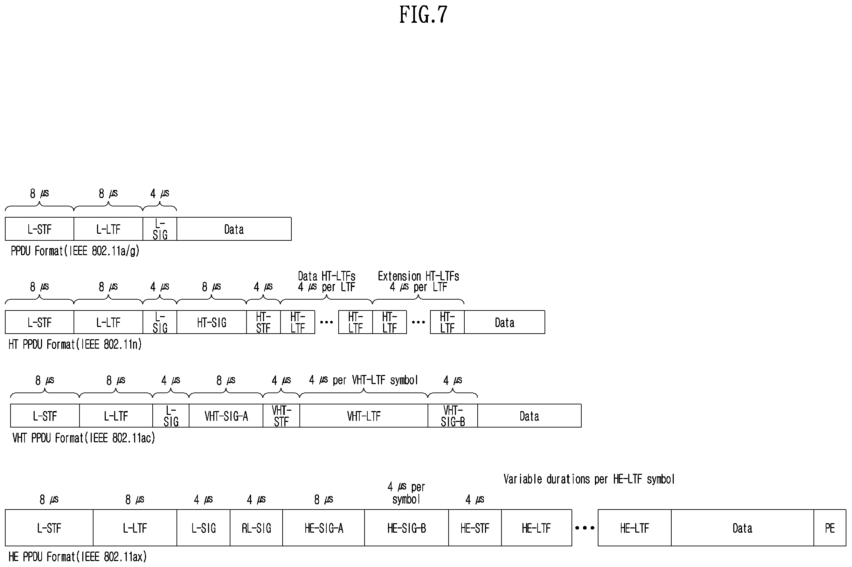

A basic PPDU frame may include a Short Training Field (STF), a Long Training Field (LTF), a SIGNAL (SIG) field, and a Data field. The most basic (e.g., non-High Throughput (HT)) PPDU frame format may consist of only L-STF (Legacy-STF), L-LTF (Legacy-LTF), SIG field, and data field. In addition, depending on the type of PPDU frame format (e.g., HT-mixed format PPDU, HT-greenfield format PPDU, VHT (Very High Throughput) PPDU, etc.), an additional (or different type) STF, LTF, and SIG fields may be included between the SIG field and the data field (this will be described later with reference to FIG. 7).

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include a RATE field and a LENGTH field. The RATE field may include information on modulation and coding rates of data. The LENGTH field may include information on the length of data. Additionally, the SIG field may include a parity bit, a SIG TAIL bit, and the like.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

A null-data packet (NDP) frame format means a frame format that does not include a data packet. That is, the NDP frame refers to a frame format that includes a physical layer convergence procedure (PLCP) header part (i.e., STF, LTF, and SIG fields) in a general PPDU frame format and does not include the remaining parts (i.e., data field). A NDP frame may also be referred to as a short frame format.

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format.

The HT PPDU format (IEEE 802.11n) additionally includes HT-SIG, HT-STF, and HT-LFT(s) fields to the basic PPDU format. The HT PPDU format shown in FIG. 7 may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format.

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format. Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us.

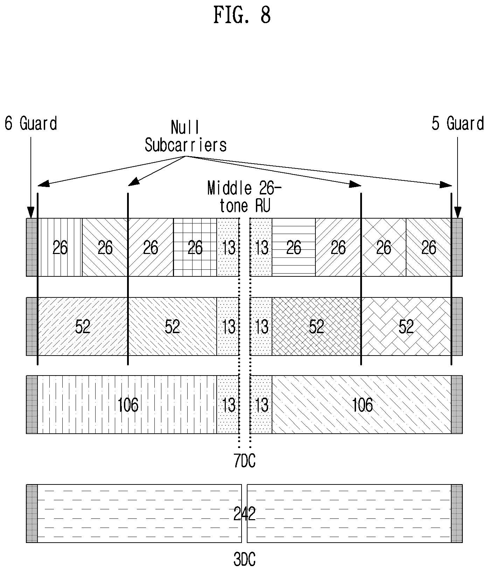

FIGs. 8 to 10 are diagrams for explaining examples of resource units of a WLAN system to which the present disclosure may be applied.

Referring to FIGS. 8 to 10, a resource unit (RU) defined in a wireless LAN system will be described. the RU may include a plurality of subcarriers (or tones). The RU may be used when transmitting signals to multiple STAs based on the OFDMA scheme. In addition, the RU may be defined even when a signal is transmitted to one STA. The RU may be used for STF, LTF, data field of the PPDU, etc.

As shown in FIGS. 8 to 10, RUs corresponding to different numbers of tones (i.e., subcarriers) are used to construct some fields of 20 MHz, 40 MHz, or 80 MHz X-PPDUs (X is HE, EHT, etc.). For example, resources may be allocated in RU units shown for the X-STF, X-LTF, and Data field.

FIG. 8 is a diagram illustrating an exemplary allocation of resource units (RUs) used on a 20 MHz band.

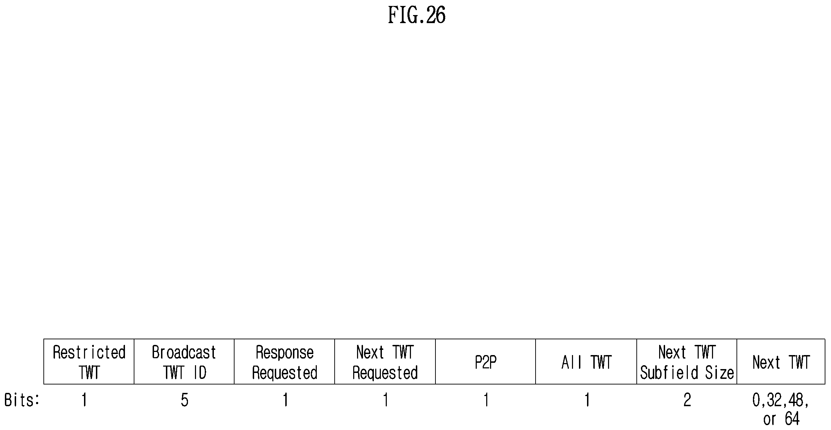

As shown at the top of FIG. 8, 26-units (i.e., units corresponding to 26 tones) may be allocated. 6 tones may be used as a guard band in the leftmost band of the 20 MHz band, and 5 tones may be used as a guard band in the rightmost band of the 20 MHz band. In addition, 7 DC tones are inserted in the center band, that is, the DC band, and 26-units corresponding to each of the 13 tones may exist on the left and right sides of the DC band. In addition, 26-unit, 52-unit, and 106-unit may be allocated to other bands. Each unit may be allocated for STAs or users.

The RU allocation of FIG. 8 is utilized not only in a situation for multiple users (MU) but also in a situation for a single user (SU), and in this case, it is possible to use one 242-unit as shown at the bottom of FIG. 8. In this case, three DC tones may be inserted.

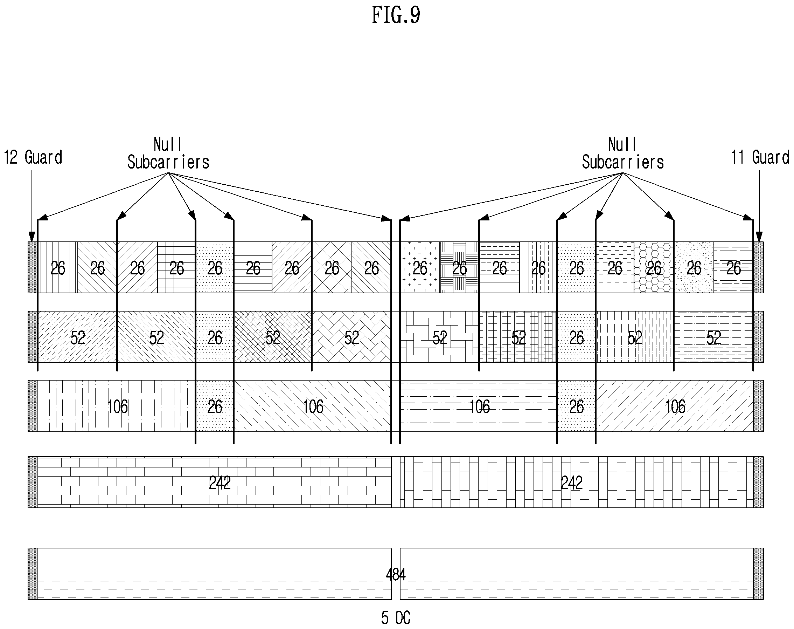

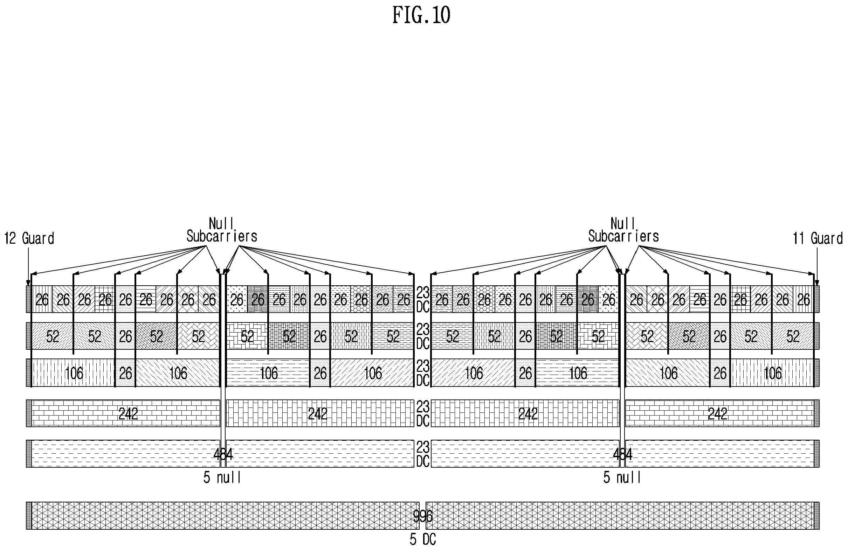

In the example of FIG. 8, RUs of various sizes, that is, 26-RU, 52-RU, 106-RU, 242-RU, etc. are exemplified, but the specific size of these RUs may be reduced or expanded. Therefore, in the present disclosure, the specific size of each RU (i.e., the number of corresponding tones) is exemplary and not restrictive. In addition, within a predetermined bandwidth (e.g., 20, 40, 80, 160, 320 MHz, ...) in the present disclosure, the number of RUs may vary according to the size of the RU. In the examples of FIG. 9 and/or FIG. 10 to be described below, the fact that the size and/or number of RUs may be varied is the same as the example of FIG. 8 .

FIG. 9 is a diagram illustrating an exemplary allocation of resource units (RUs) used on a 40 MHz band.

Just as RUs of various sizes are used in the example of FIG. 8, 26-RU, 52-RU, 106-RU, 242-RU, 484-RU, and the like may be used in the example of FIG. 9 as well. In addition, 5 DC tones may be inserted at the center frequency, 12 tones may be used as a guard band in the leftmost band of the 40MHz band, and 11 tones may be used as a guard band in the rightmost band of the 40MHz band.

In addition, as shown, when used for a single user, a 484-RU may be used.

FIG. 10 is a diagram illustrating an exemplary allocation of resource units (RUs) used on an 80 MHz band.

Just as RUs of various sizes are used in the example of FIG. 8 and FIG. 9, 26-RU, 52-RU, 106-RU, 242-RU, 484-RU, 996-RU and the like may be used in the example of FIG. 10 as well. In addition, in the case of an 80 MHz PPDU, RU allocation of HE PPDUs and EHT PPDUs may be different, and the example of FIG. 10 shows an example of RU allocation for 80 MHz EHT PPDUs. The scheme that 12 tones are used as a guard band in the leftmost band of the 80 MHz band and 11 tones are used as a guard band in the rightmost band of the 80 MHz band in the example of FIG. 10 is the same in HE PPDU and EHT PPDU. Unlike HE PPDU, where 7 DC tones are inserted in the DC band and there is one 26-RU corresponding to each of the 13 tones on the left and right sides of the DC band, in the EHT PPDU, 23 DC tones are inserted into the DC band, and one 26-RU exists on the left and right sides of the DC band. Unlike the HE PPDU, where one null subcarrier exists between 242-RUs rather than the center band, there are five null subcarriers in the EHT PPDU. In the HE PPDU, one 484-RU does not include null subcarriers, but in the EHT PPDU, one 484-RU includes 5 null subcarriers.

In addition, as shown, when used for a single user, 996-RU may be used, and in this case, 5 DC tones are inserted in common with HE PPDU and EHT PPDU.

EHT PPDUs over 160 MHz may be configured with a plurality of 80 MHz subblocks in FIG. 10. The RU allocation for each 80 MHz subblock may be the same as that of the 80 MHz EHT PPDU of FIG. 10. If the 80 MHz subblock of the 160 MHz or 320 MHz EHT PPDU is not punctured and the entire 80 MHz subblock is used as part of RU or multiple RU (MRU), the 80 MHz subblock may use 996-RU of FIG. 10.

Here, the MRU corresponds to a group of subcarriers (or tones) composed of a plurality of RUs, and the plurality of RUs constituting the MRU may be RUs having the same size or RUs having different sizes. For example, a single MRU may be defined as 52+26-tone, 106+26-tone, 484+242-tone, 996+484-tone, 996+484+242-tone, 2X996+484-tone, 3X996-tone, or 3X996+484-tone. Here, the plurality of RUs constituting one MRU may correspond to small size (e.g., 26, 52, or 106) RUs or large size (e.g., 242, 484, or 996) RUs. That is, one MRU including a small size RU and a large size RU may not be configured/defined. In addition, a plurality of RUs constituting one MRU may or may not be consecutive in the frequency domain.

When an 80 MHz subblock includes RUs smaller than 996 tones, or parts of the 80 MHz subblock are punctured, the 80 MHz subblock may use RU allocation other than the 996-tone RU.

The RU of the present disclosure may be used for uplink (UL) and/or downlink (DL) communication. For example, when trigger-based UL-MU communication is performed, the STA transmitting the trigger (e.g., AP) may allocate a first RU (e.g., 26/52/106/242-RU, etc.) to a first STA and allocate a second RU (e.g., 26/52/106/242-RU, etc.) to a second STA, through trigger information (e.g., trigger frame or triggered response scheduling (TRS)). Thereafter, the first STA may transmit a first trigger-based (TB) PPDU based on the first RU, and the second STA may transmit a second TB PPDU based on the second RU. The first/second TB PPDUs may be transmitted to the AP in the same time period.

For example, when a DL MU PPDU is configured, the STA transmitting the DL MU PPDU (e.g., AP) may allocate a first RU (e.g., 26/52/106/242-RU, etc.) to a first STA and allocate a second RU (e.g., 26/52/106/242-RU, etc.) to a second STA. That is, the transmitting STA (e.g., AP) may transmit HE-STF, HE-LTF, and Data field for the first STA through the first RU and transmit HE-STF, HE-LTF, and Data field for the second STA through the second RU, in one MU PPDU,

Information on the allocation of RUs may be signaled through HE-SIG-B in the HE PPDU format.

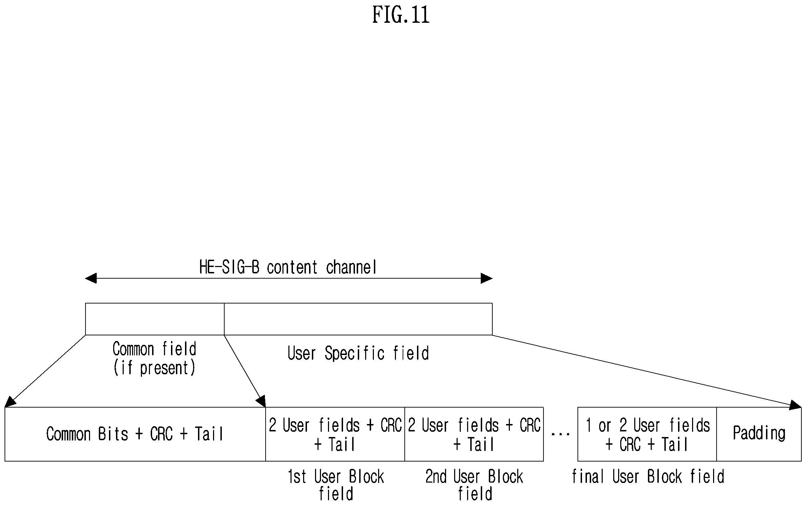

FIG. 11 illustrates an example structure of a HE-SIG-B field.

As shown, the HE-SIG-B field may include a common field and a user-specific field. If HE-SIG-B compression is applied (e.g., full-bandwidth MU-MIMO transmission), the common field may not be included in HE-SIG-B, and the HE-SIG-B content channel may include only a user-specific field. If HE-SIG-B compression is not applied, the common field may be included in HE-SIG-B.

The common field may include information on RU allocation (e.g., RU assignment, RUs allocated for MU-MIMO, the number of MU-MIMO users (STAs), etc.)

The common field may include N*8 RU allocation subfields. Here, N is the number of subfields, N = 1 in the case of 20 or 40 MHz MU PPDU, N = 2 in the case of 80 MHz MU PPDU, N = 4 in the case of 160 MHz or 80 + 80 MHz MU PPDU, etc. One 8-bit RU allocation subfield may indicate the size (26, 52, 106, etc.) and frequency location (or RU index) of RUs included in the 20 MHz band.

For example, if a value of the 8-bit RU allocation subfield is 00000000, it may indicate that nine 26-RUs are sequentially allocated in order from the leftmost to the rightmost in the example of FIG. 8, if the value is 00000001, it may indicate that seven 26-RUs and one 52-RU are sequentially allocated in order from leftmost to rightest, and if the value is 00000010, it may indicate that five 26-RUs, one 52-RU, and two 26-RUs are sequentially allocated from the leftmost side to the rightmost side.

As an additional example, if the value of the 8-bit RU allocation subfield is 01000y2y1y0, it may indicate that one 106-RU and five 26-RUs are sequentially allocated from the leftmost to the rightmost in the example of FIG. 8. In this case, multiple users/STAs may be allocated to the 106-RU in the MU-MIMO scheme. Specifically, up to 8 users/STAs may be allocated to the 106-RU, and the number of users/STAs allocated to the 106-RU is determined based on 3-bit information (i.e., y2y1y0). For example, when the 3-bit information (y2y1y0) corresponds to a decimal value N, the number of users/STAs allocated to the 106-RU may be N+1.

Basically, one user/STA may be allocated to each of a plurality of RUs, and different users/STAs may be allocated to different RUs. For RUs larger than a predetermined size (e.g., 106, 242, 484, 996-tones, ...), a plurality of users/STAs may be allocated to one RU, and MU-MIMO scheme may be applied for the plurality of users/STAs.

The set of user-specific fields includes information on how all users (STAs) of the corresponding PPDU decode their payloads. User-specific fields may contain zero or more user block fields. The non-final user block field includes two user fields (i.e., information to be used for decoding in two STAs). The final user block field contains one or two user fields. The number of user fields may be indicated by the RU allocation subfield of HE-SIG-B, the number of symbols of HE-SIG-B, or the MU-MIMO user field of HE-SIG-A. A User-specific field may be encoded separately from or independently of a common field.

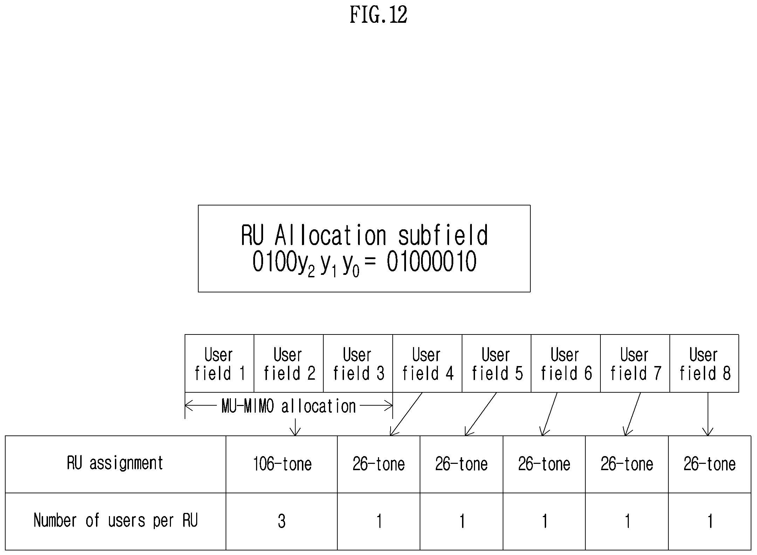

FIG. 12 is a diagram for explaining a MU-MIMO method in which a plurality of users/STAs are allocated to one RU.

In the example of FIG. 12, it is assumed that the value of the RU allocation subfield is 01000010. This corresponds to the case where y2yly0 = 010 in 01000y2y1y0. 010 corresponds to 2 in decimal (i.e., N=2) and may indicate that 3 (=N+1) users are allocated to one RU. In this case, one 106-RU and five 26-RUs may be sequentially allocated from the leftmost side to the rightmost side of a specific 20 MHz band/channel. Three users/STAs may be allocated to the 106-RU in a MU-MIMO manner. As a result, a total of 8 users/STAs are allocated to the 20 MHz band/channel, and the user-specific field of HE-SIG-B may include 8 user fields (i.e., 4 user block fields). Eight user fields may be assigned to RUs as shown in FIG. 12.

The user field may be constructed based on two formats. The user field for a MU-MIMO allocation may be constructed with a first format, and the user field for non-MU-MIMO allocation may be constructed with a second format. Referring to the example of FIG. 12, user fields 1 to 3 may be based on the first format, and user fields 4 to 8 may be based on the second format. The first format and the second format may contain bit information of the same length (e.g., 21 bits).

The user field of the first format (i.e., format for MU-MIMO allocation) may be constructed as follows. For example, out of all 21 bits of one user field, B0-B10 includes the user's identification information (e.g., STA-ID, AID, partial AID, etc.), B 1 1-14 includes spatial configuration information such as the number of spatial streams for the corresponding user, B15-B18 includes Modulation and Coding Scheme (MCS) information applied to the Data field of the corresponding PPDU, B19 is defined as a reserved field, and B20 may include information on a coding type (e.g., binary convolutional coding (BCC) or low-density parity check (LDPC)) applied to the Data field of the corresponding PPDU.

The user field of the second format (i.e., the format for non-MU-MIMO allocation) may be constructed as follows. For example, out of all 21 bits of one user field, B0-B10 includes the user's identification information (e.g., STA-ID, AID, partial AID, etc.), B11-13 includes information on the number of spatial streams (NSTS) applied to the corresponding RU, B14 includes information indicating whether beamforming is performed (or whether a beamforming steering matrix is applied), B15-B18 includes Modulation and Coding Scheme (MCS) information applied to the Data field of the corresponding PPDU, B19 includes information indicating whether DCM (dual carrier modulation) is applied, and B20 may include information on a coding type (e.g., BCC or LDPC) applied to the Data field of the corresponding PPDU.

MCS, MCS information, MCS index, MCS field, and the like used in the present disclosure may be indicated by a specific index value. For example, MCS information may be indicated as index 0 to index 11. MCS information includes information on constellation modulation type (e.g., BPSK, QPSK, 16-QAM, 64-QAM, 256-QAM, 1024-QAM, etc.), and coding rate (e.g., 1/2, 2/ 3, 3/4, 5/6, etc.). Information on a channel coding type (e.g., BCC or LDPC) may be excluded from the MCS information.

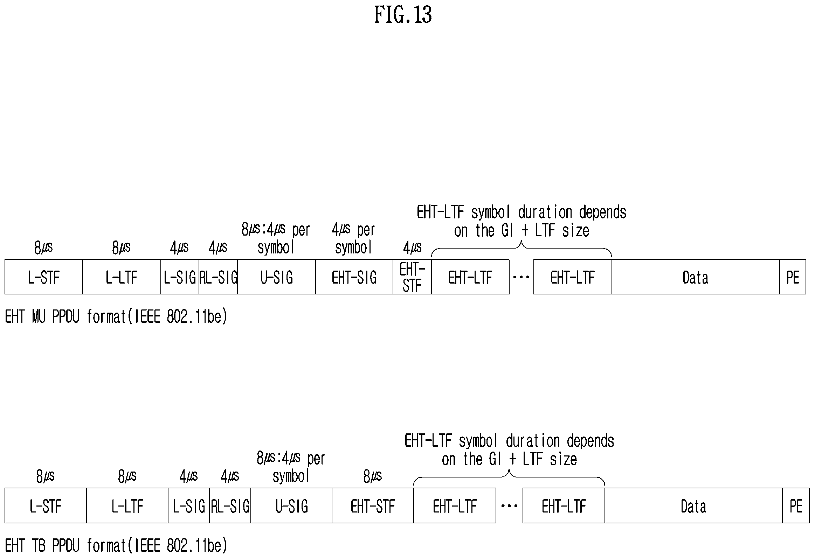

FIG. 13 illustrates an example of a PPDU format to which the present disclosure may be applied.

The PPDU of FIG. 13 may be referred as various names such as an EHT PPDU, a transmitted PPDU, a received PPDU, a first type or an N^{th} type PPDU. For example, the PPDU or EHT PPDU of the present disclosure may be referred as various names such as a transmission PPDU, a reception PPDU, a first type or an N^{th} type PPDU. In addition, the EHT PPU may be used in an EHT system and/or a new wireless LAN system in which the EHT system is improved.

The EHT MU PPDU of FIG. 13 corresponds to a PPDU carrying one or more data (or PSDUs) for one or more users. That is, the EHT MU PPDU may be used for both SU transmission and MU transmission. For example, the EHT MU PPDU may correspond to a PPDU for one receiving STA or a plurality of receiving STAs.

In the EHT TB PPDU of FIG. 13, the EHT-SIG is omitted compared to the EHT MU PPDU. Upon receiving a trigger for UL MU transmission (eg, a trigger frame or TRS), the STA may perform UL transmission based on the EHT TB PPDU format.

In the example of the EHT PPDU format of FIG. 13, L-STF to EHT-LTF correspond to a preamble or a physical preamble, and may be generated/transmitted/received/acquired/decoded in the physical layer .

A Subcarrier frequency spacing of L-STF, L-LTF, L-SIG, RL-SIG, Universal SIGNAL (U-SIG), EHT-SIG field (these are referred to as pre-EHT modulated fields) may be set to 312.5 kHz. A subcarrier frequency spacing of the EHT-STF, EHT-LTF, Data, and PE field (these are referred to as EHT modulated fields) may be set to 78.125 kHz. That is, the tone/subcarrier index of L-STF, L-LTF, L-SIG, RL-SIG, U-SIG, and EHT-SIG field may be indicated in units of 312.5 kHz, and the tone/subcarrier index of EHT-STF, EHT-LTF, Data, and PE field may be indicated in units of 78.125 kHz.

The L-LTF and L-STF of FIG. 13 may be constructed identically to the corresponding fields of the PPDU described in FIGS. 6 to 7.

The L-SIG field of FIG. 13 may be constructed with 24 bits and may be used to communicate rate and length information. For example, the L-SIG field includes a 4-bit Rate field, a 1-bit Reserved bit, a 12-bit Length field, a 1-bit Parity field, and a 6-bit Tail field may be included. For example, the 12-bit Length field may include information on a time duration or a length of the PPDU. For example, a value of the 12-bit Length field may be determined based on the type of PPDU. For example, for a non-HT, HT, VHT, or EHT PPDU, the value of the Length field may be determined as a multiple of 3. For example, for the HE PPDU, the value of the Length field may be determined as a multiple of 3 + 1 or a multiple of 3 + 2.

For example, the transmitting STA may apply BCC encoding based on a coding rate of 1/2 to 24-bit information of the L-SIG field. Thereafter, the transmitting STA may obtain 48-bit BCC coded bits. BPSK modulation may be applied to 48-bit coded bits to generate 48 BPSK symbols. The transmitting STA may map 48 BPSK symbols to any location except for a pilot subcarrier (e,g,, {subcarrier index -21, -7, +7, +21}) and a DC subcarrier (e.g., {subcarrier index 0}). As a result, 48 BPSK symbols may be mapped to subcarrier indices - 26 to -22, -20 to -8, -6 to -1, +1 to +6, +8 to +20, and +22 to +26. The transmitting STA may additionally map the signals of {-1, -1, -1, 1} to the subcarrier index {-28, -27, +27, +28}. The above signal may be used for channel estimation in the frequency domain corresponding to {-28, -27, +27, +28}.

The transmitting STA may construct RL-SIG which is constructed identically to L-SIG. For RL-SIG, BPSK modulation is applied. The receiving STA may recognize that the received PPDU is a HE PPDU or an EHT PPDU based on the existence of the RL-SIG.

After the RL-SIG of FIG. 13, a Universal SIG (U-SIG) may be inserted. The U-SIG may be referred as various names such as a first SIG field, a first SIG, a first type SIG, a control signal, a control signal field, and a first (type) control signal, etc.

The U-SIG may include N-bit information and may include information for identifying the type of EHT PPDU. For example, U-SIG may be configured based on two symbols (e.g., two consecutive OFDM symbols). Each symbol (e.g., OFDM symbol) for the U-SIG may have a duration of 4us, and the U-SIG may have a total 8us duration. Each symbol of the U-SIG may be used to transmit 26 bit information. For example, each symbol of the U-SIG may be transmitted and received based on 52 data tones and 4 pilot tones.

Through the U-SIG (or U-SIG field), for example, A bit information (e.g., 52 un-coded bits) may be transmitted, the first symbol of the U-SIG (e.g., U-SIG-1) may transmit the first X bit information (e.g., 26 un-coded bits) of the total A bit information, and the second symbol of the U-SIG (e.g., U-SIG-2) may transmit the remaining Y-bit information (e.g., 26 un-coded bits) of the total A-bit information. For example, the transmitting STA may obtain 26 un-coded bits included in each U-SIG symbol. The transmitting STA may generate 52-coded bits by performing convolutional encoding (e.g., BCC encoding) based on a rate of R = 1/2, and perform interleaving on the 52-coded bits. The transmitting STA may generate 52 BPSK symbols allocated to each U-SIG symbol by performing BPSK modulation on the interleaved 52-coded bits. One U-SIG symbol may be transmitted based on 56 tones (subcarriers) from subcarrier index -28 to subcarrier index +28, except for DC index 0. The 52 BPSK symbols generated by the transmitting STA may be transmitted based on the remaining tones (subcarriers) excluding pilot tones -21, -7, +7, and +21 tones.

For example, the A bit information (e.g., 52 un-coded bits) transmitted by the U-SIG includes a CRC field (e.g., a 4-bit field) and a tail field (e.g., 6 bit-length field). The CRC field and the tail field may be transmitted through the second symbol of the U-SIG. The CRC field may be constructed based on 26 bits allocated to the first symbol of U-SIG and 16 bits remaining except for the CRC/tail field in the second symbol, and may be constructed based on a conventional CRC calculation algorithm. In addition, the tail field may be used to terminate the trellis of the convolution decoder, and for example, the tail field may be set to 0.

A bit information (e.g., 52 un-coded bits) transmitted by the U-SIG (or U-SIG field) may be devided into version-independent bits and version-independent bits. For example, a size of the version-independent bits may be fixed or variable. For example, the version-independent bits may be allocated only to the first symbol of U-SIG, or the version-independent bits may be allocated to both the first symbol and the second symbol of U-SIG. For example, the version-independent bits and the version-dependent bits may be referred as various names such as a first control bit and a second control bit, etc.

For example, the version-independent bits of the U-SIG may include a 3-bit physical layer version identifier (PHY version identifier). For example, the 3-bit PHY version identifier may include information related to the PHY version of the transmitted/received PPDU. For example, the first value of the 3-bit PHY version identifier may indicate that the transmission/reception PPDU is an EHT PPDU. In other words, when transmitting the EHT PPDU, the transmitting STA may set the 3-bit PHY version identifier to a first value. In other words, the receiving STA may determine that the received PPDU is an EHT PPDU based on the PHY version identifier having the first value.

For example, the version-independent bits of U-SIG may include a 1-bit UL/DL flag field. A first value of the 1-bit UL/DL flag field is related to UL communication, and a second value of the UL/DL flag field is related to DL communication.

For example, the version-independent bits of the U-SIG may include information on the length of a transmission opportunity (TXOP) and information on a BSS color ID.

For example, if the EHT PPDU is classified into various types (e.g., EHT PPDU related to SU mode, EHT PPDU related to MU mode, EHT PPDU related to TB mode, EHT PPDU related to Extended Range transmission, etc.), information on the type of EHT PPDU may be included in the version-dependent bits of the U-SIG.

For example, the U-SIG may include information on 1) a bandwidth field containing information on a bandwidth, 2) a field containing information on a MCS scheme applied to EHT-SIG, 3) an indication field containing information related to whether the DCM technique is applied to the EHT-SIG, 4) a field containing information on the number of symbols used for EHT-SIG, 5) a field containing information on whether EHT-SIG is constructed over all bands, 6) a field containing information on the type of EHT-LTF/STF, and 7) a field indicating the length of EHT-LTF and CP length.

Preamble puncturing may be applied to the PPDU of FIG. 13. Preamble puncturing means that puncturing for some bands (e.g., a secondary 20 MHz band) among all bands of a PPDU is applied. For example, when a 80 MHz PPDU is transmitted, a STA may apply puncturing to a secondary 20 MHz band of a 80 MHz band and transmit a PPDU only through a primary 20 MHz band and a secondary 40 MHz band.

For example, a pattern of preamble puncturing may be configured in advance. For example, when a first puncturing pattern is applied, puncturing may be applied only to a secondary 20 MHz band within a 80 MHz band. For example, when a second puncturing pattern is applied, puncturing may be applied to only any one of two secondary 20 MHz bands included in a secondary 40 MHz band within a 80 MHz band. For example, when a third puncturing pattern is applied, puncturing may be applied to only a secondary 20 MHz band included in a primary 80 MHz band within a 160 MHz band (or a 80+80 MHz band). For example, when a fourth puncturing pattern is applied, a primary 40 MHz band included in a primary 80 MHz band within a 160 MHz band (or a 80+80 MHz band) is present and puncturing may be applied to at least one 20 MHz channel which does not belong to a primary 40 MHz band.

Information on preamble puncturing applied to a PPDU may be included in a U-SIG and/or a EHT-SIG. For example, the first field of the U-SIG may include information on the contiguous bandwidth of the PPDU, and the second field of the U-SIG may include information on preamble puncturing applied to the PPDU.

For example, the U-SIG and the EHT-SIG may include information on preamble puncturing based on the following method. If the bandwidth of the PPDU exceeds 80 MHz, the U-SIG may be individually constructed in units of 80 MHz. For example, if the bandwidth of the PPDU is 160 MHz, the PPDU may include a first U-SIG for a first 80 MHz band and a second U-SIG for a second 80 MHz band. In this case, the first field of the first U-SIG includes information on the 160 MHz bandwidth, and the second field of the first U-SIG includes information on preamble puncturing applied to the first 80 MHz band (i.e., information on a preamble puncturing pattern). In addition, the first field of the second U-SIG includes information on a 160 MHz bandwidth, and the second field of the second U-SIG includes information on preamble puncturing applied to a second 80 MHz band (i.e., information on a preamble puncturing pattern). The EHT-SIG following the first U-SIG may include information on preamble puncturing applied to the second 80 MHz band (i.e., information on a preamble puncturing pattern), and the EHT-SIG following the second U-SIG may include information on preamble puncturing applied to the first 80 MHz band (i.e., information on a preamble puncturing pattern).

Additionally or alternatively, the U-SIG and the EHT-SIG may include information on preamble puncturing based on the following method. The U-SIG may include information on preamble puncturing for all bands (i.e., information on a preamble puncturing pattern). That is, EHT-SIG does not include information on preamble puncturing, and only U-SIG may include information on preamble puncturing (ie, information on a preamble puncturing pattern).

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

The EHT-SIG of FIG. 13 may include control information for the receiving STA. EHT-SIG may be transmitted through at least one symbol, and one symbol may have a length of 4us. Information on the number of symbols used for EHT-SIG may be included in U-SIG.

The EHT-SIG may include technical features of HE-SIG-B described through FIGS. 11 and 12. For example, EHT-SIG, like the example of FIG. 8, may include a common field and a user-specific field. The Common field of the EHT-SIG may be omitted, and the number of user-specific fields may be determined based on the number of users.

As in the example of FIG. 11, the common field of the EHT-SIG and the user-specific field of the EHT-SIG may be coded separately. One user block field included in the user-specific field may contain information for two user fields, but the last user block field included in the user-specific field may contain one or two user fields. That is, one user block field of the EHT-SIG may contain up to two user fields. As in the example of FIG. 12, each user field may be related to MU-MIMO allocation or non-MU-MIMO allocation.

In the same way as in the example of FIG. 11, the common field of the EHT-SIG may include a CRC bit and a Tail bit, The length of the CRC bit may be determined as 4 bits, and the length of the tail bit is determined by 6 bits and may be set to 000000.

As in the example of FIG. 11, the common field of the EHT-SIG may include RU allocation information. RU allocation information may mean information on the location of an RU to which a plurality of users (i.e., a plurality of receiving STAs) are allocated. RU allocation information may be configured in units of 8 bits (or N bits).

A mode in which a common field of EHT-SIG is omitted may be supported. The mode in which the common field of the EHT-SIG is omitted may be referred as a compressed mode. When the compressed mode is used, a plurality of users (i.e., a plurality of receiving STAs) of the EHT PPDU may decode the PPDU (e.g., the data field of the PPDU) based on non-OFDMA. That is, a plurality of users of the EHT PPDU may decode a PPDU (e.g., a data field of the PPDU) received through the same frequency band. When a non-compressed mode is used, multiple users of the EHT PPDU may decode the PPDU (e.g., the data field of the PPDU) based on OFDMA. That is, a plurality of users of the EHT PPDU may receive the PPDU (e.g., the data field of the PPDU) through different frequency bands.

EHT-SIG may be constructed based on various MCS scheme. As described above, information related to the MCS scheme applied to the EHT-SIG may be included in the U-SIG. The EHT-SIG may be constructed based on the DCM scheme. For example, a first modulation technique may be applied to the contiguous half tones of N data tones (e.g., 52 data tones) allocated for a EHT-SIG and a second modulation technique may be applied to the remaining contiguous half tones. In other words, a transmitting STA may modulate specific control information into a first symbol based on a first modulation technique and allocate it to contiguous half tones and may modulate the same control information into a second symbol based on a second modulation technique and allocate it to the remaining contiguous half tones. As described above, information related to whether the DCM scheme is applied to the EHT-SIG (e.g., a 1-bit field) may be included in the U-SIG. The EHT-STF of FIG. 13 may be used to enhance automatic gain control (AGC) estimation in a MIMO environment or an OFDMA environment. The EHT-LTF of FIG. 13 may be used to estimate a channel in a MIMO environment or an OFDMA environment.

Information on the type of STF and/or LTF (including information on a guard interval (GI) applied to LTF) may be included in the U-SIG field and/or the EHT-SIG field of FIG. 13.

The PPDU (i.e., EHT PPDU) of FIG. 13 may be constructed based on an example of RU allocation of FIGS. 8 to 10.

For example, a EHT PPDU transmitted on a 20 MHz band, that is, a 20 MHz EHT PPDU may be constructed based on the RU of FIG. 8. That is, a RU location of EHT-STF, EHT-LTF, and data field included in the EHT PPDU may be determined as shown in FIG. 8. A EHT PPDU transmitted on a 40 MHz band, that is, a 40 MHz EHT PPDU may be constructed based on the RU of FIG. 9. That is, a RU location of EHT-STF, EHT-LTF, and data field included in the EHT PPDU may be determined as shown in FIG. 9.

The EHT PPDU transmitted on the 80 MHz band, that is, the 80 MHz EHT PPDU may be constructed based on the RU of FIG. 10. That is, a RU location of EHT-STF, EHT-LTF, and data field included in the EHT PPDU may be determined as shown in FIG. 10. The tone-plan for 80 MHz in FIG. 10 may correspond to two repetitions of the tone-plan for 40 MHz in FIG. 9.

The tone-plan for 160/240/320 MHz may be configured in the form of repeating the pattern of FIG. 9 or 10 several times.

The PPDU of FIG. 13 may be identified as an EHT PPDU based on the following method.

The receiving STA may determine the type of the received PPDU as the EHT PPDU based on the following. For example, when 1) the first symbol after the L-LTF signal of the received PPDU is BPSK, 2) RL-SIG in which the L-SIG of the received PPDU is repeated is detected, and 3) the result of applying the modulo 3 calculation to the value of the Length field of the L-SIG of the received PPDU (i.e., the remainder after dividing by 3) is detected as 0, the received PPDU may be determined as a EHT PPDU. When the received PPDU is determined to be an EHT PPDU, the receiving STA may determine the type of the EHT PPDU based on bit information included in symbols subsequent to the RL-SIG of FIG. 13. In other words, the receiving STA may determine the received PPDU as a EHT PPDU, based on 1) the first symbol after the L-LTF signal, which is BSPK, 2) RL-SIG contiguous to the L-SIG field and identical to the L-SIG, and 3) L-SIG including a Length field in which the result of applying modulo 3 is set to 0.

For example, the receiving STA may determine the type of the received PPDU as the HE PPDU based on the following. For example, when 1) the first symbol after the L-LTF signal is BPSK, 2) RL-SIG in which L-SIG is repeated is detected, and 3) the result of applying modulo 3 to the length value of L-SIG is detected as 1 or 2, the received PPDU may be determined as a HE PPDU.

For example, the receiving STA may determine the type of the received PPDU as non-HT, HT, and VHT PPDU based on the following. For example, when 1) the first symbol after the L-LTF signal is BPSK and 2) RL-SIG in which L-SIG is repeated is not detected, the received PPDU may be determined as non-HT, HT, and VHT PPDU. In addition, although a receiving STA detects repetition of a RL-SIG, when a result of applying modulo 3 to a length value of a L-SIG is detected as 0, a received PPDU may be determined as a non-HT, a HT and a VHT PPDU.

The PPDU of FIG. 13 may be used to transmit and receive various types of frames. For example, the PPDU of FIG. 13 may be used for (simultaneous) transmission and reception of one or more of a control frame, a management frame, or a data frame.

Hereinafter, a target wake time (TWT) is described.

A TWT is a power saving (PS) technology which may improve energy efficiency of non-AP STAs by defining a service period (SP) between an AP and non-AP STA and sharing information about a SP each other to reduce media contention. A STA which performs a request/a suggest/a demand, etc. in a TWT setup step may be referred to as a TWT requesting STA. In addition, an AP which responds to a corresponding request such as Accept/Reject, etc. may be referred to as a TWT responding STA. A setup step may include a TWT request for an AP of a STA, a type of a TWT operation performed and a process of determining/defining a frame type transmitted or received. A TWT operation may be divided into an individual TWT and a broadcast TWT.

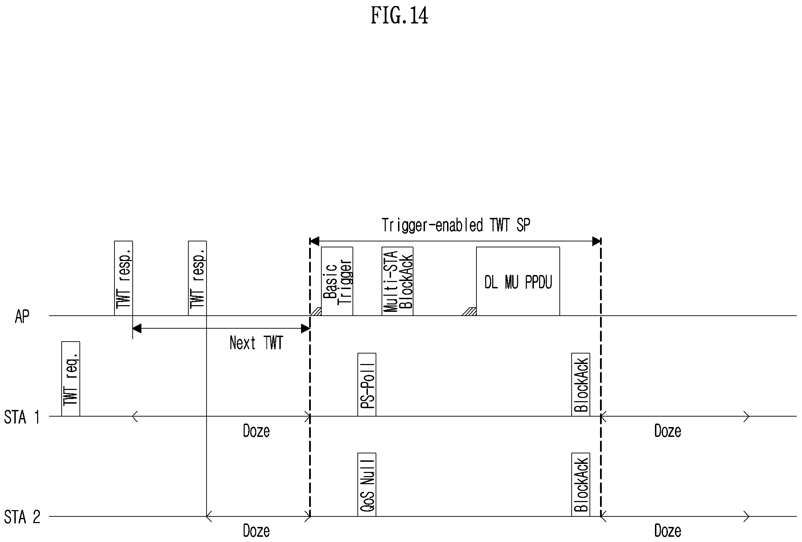

FIG. 14 is a diagram for describing an example of an individual TWT operation to which the present disclosure may be applied.

An individual TWT is a mechanism that an AP and non-AP STA perform data exchange after performing negotiation for an awake/doze status of a non-AP STA through transmission or reception of a TWT request/response frame. In an example of FIG. 14, an AP and STA1 may form a trigger-enabled TWT agreement through a TWT request frame and a TWT response frame. Here, a method used by STA1 is a solicited TWT method, which is a method that when STA1 transmits a TWT request frame to an AP, STA1 receives information for a TWT operation from an AP through a TWT response frame. On the other hand, STA2 which performs an unsolicited TWT method may receive information on a trigger-enabled TWT agreement configuration from an AP through an unsolicited TWT response. Specifically, STA2 may calculate a next TWT by adding a specific number from a current TWT value. During a trigger-enabled TWT SP, an AP may transmit a trigger frame to STAs. The trigger frame may inform STAs that an AP has buffered data. In response to it, STA1 may inform an AP of its awake status by transmitting a PS-Poll frame. In addition, STA2 may inform an AP of its awake status by transmitting a QoS Null frame. Here, a data frame transmitted by STA1 and STA2 may be a frame in a TB PPDU form. An AP which confirmed a status of STA1 and STA2 may transmit a DL MU PPDU to awake STAs. When a corresponding TWT SP expires, STA1 and STA2 may switch to a doze status.

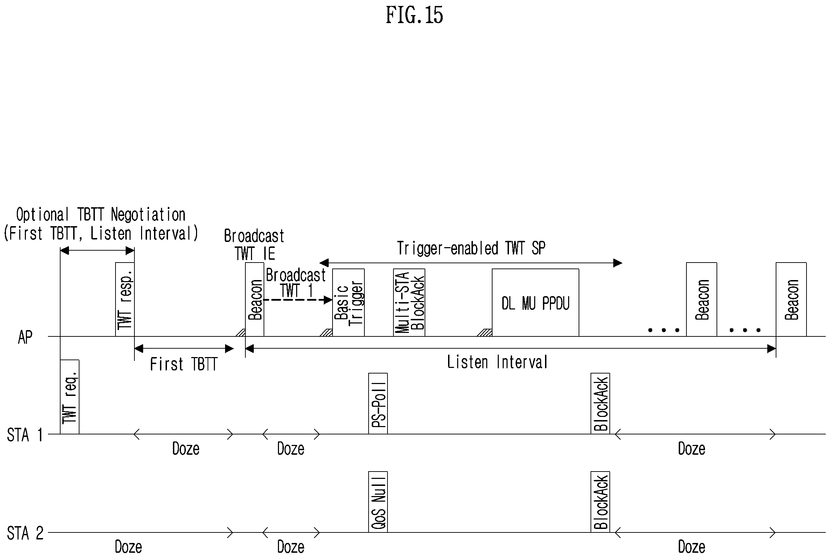

FIG. 15 is a diagram for describing an example of a broadcast TWT operation to which the present disclosure may be applied.

A broadcast TWT is a TWT that a non-AP STA (or a TWT scheduling STA) acquires information on a target beacon transmission time (TBTT) and a listen interval, etc. by transmitting or receiving a TWT request/response frame with an AP (or a TWT scheduled STA). Here, a negotiation operation for a TBTT may be performed. Based on it, an AP may define a frame which will include scheduling information of a TWT through a beacon frame. In FIG. 15, STA1 performs a solicited TWT operation and STA2 performs an unsolicited TWT operation. An AP may transmit a DL MU PPDU after confirming an awake status of STAs through a trigger transmitted by an AP. It may be the same as a process of an individual TWT. In a broadcast TWT, a trigger-enabled TWT SP including a beacon frame may be repeated several times at a certain interval.

Delivery of TWT information may be performed through a TWT information frame and a TWT information element.

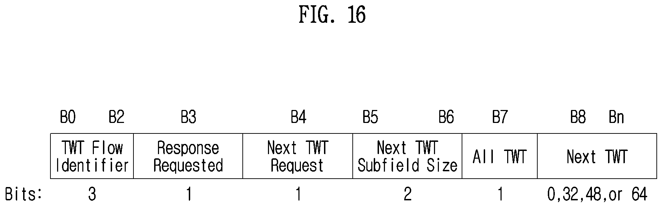

FIG. 16 is a diagram for describing an example of a TWT information element format.

A TWT information frame is transmitted by a STA to request or deliver information on a TWT agreement and is transmitted by one of STAs in an existing TWT agreement. An action frame of a TWT Information frame includes a TWT information field. A TWT Information field may include a 3-bit TWT flow identifier subfield, a 1-bit response requested subfield, a 1-bit next TWT request subfield, a 2-bit next TWT subfield size subfield, a 1-bit all TWT subfield and a 0/32/48/64-bit next TWT subfield.

A size of a TWT Information field is variable according to a size of a next TWT field. A TWT flow identifier subfield includes an identifier of a TWT flow that TWT information is requested or provided. A TWT flow identifier subfield may be reserved when a value of all TWT subfields is 1.

A response requested subfield may indicate whether a STA transmitting a frame including a TWT information field requests that a TWT information frame will be transmitted in response to a corresponding frame. When a response requested subfield is configured as 0, a receiving STA may be requested not to transmit a TWT information frame in response to a corresponding frame. When a response requested subfield is configured as 1, a receiving STA may be requested to transmit a TWT information frame in response to a corresponding frame.

When a next TWT request subfield is configured as 1, it may indicate that a TWT information frame is a request for delivery of a TWT information frame including a next TWT field of a non-zero length. Otherwise, a next TWT request subfield may be configured as 0.

When a value of a next TWT subfield size subfield is 0, 1, 2, and 3, it may indicate that a size of a next TWT subfield is 0, 32, 48, and 64, respectively.

When all TWT subfields are configured as 1, it may indicate that a TWT information frame reschedules all TWTs. Otherwise, all TWT subfields may be configured as 0.

A next TWT subfield may have a variable length according to a value of a next TWT subfield size. A value included in a next TWT subfield may have a value corresponding to the least significant portion of a timing synchronization function (TSF) in a next TWT for a TWT specified by a TWT flow identifier subfield.

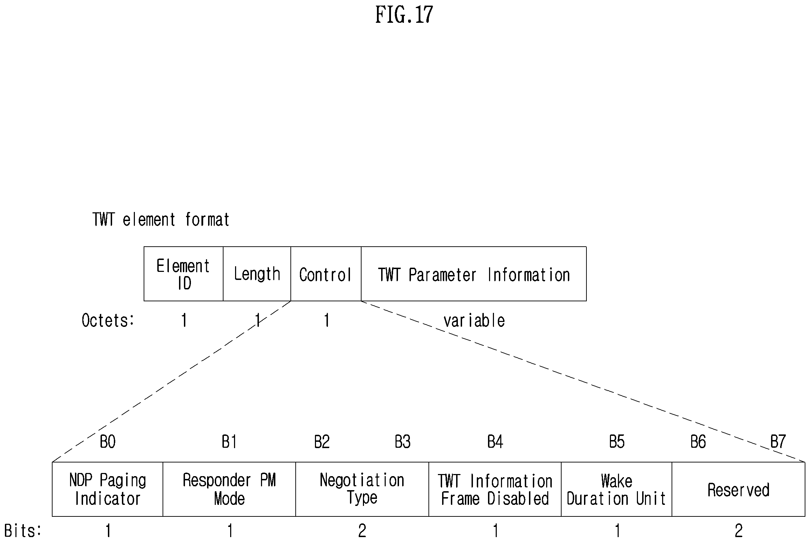

FIG. 17 is a diagram for describing an example of a TWT information element format.

A TWT information element may be transmitted or received by being included in a beacon, a probe response, a (re)association response frame, etc. A TWT information element may include an element ID field, a length field, a control field and a TWT parameter information field.

A control field of a TWT information element has the same format regardless of an individual TWT and a broadcast TWT.

A NDP paging indication subfield may have a value of 1 when a NDP paging field exists and may have a value of 0 when a NDP paging field does not exist.

A responder PM mode subfield may represent a power management (PM) mode.

A negotiation type subfield may represent whether information included in a TWT element is about a negotiation of broadcast TWT or individual TWT(s) or is about a wake TBTT interval.

For example, when a value of a negotiation type subfield is 0, a TWT subfield is about a future individual TWT SP start time and a TWT element includes one individual TWT parameter set. It may correspond to an individual TWT negotiation between a TWT requesting STA and a TWT responding STA or may correspond to an individual TWT announcement by a TWT responder.

For example, when a value of a negotiation type subfield is 1, a TWT subfield is about a next TBTT time and a TWT element includes one individual TWT parameter set. It may correspond to a wake TBTT and a wake interval negotiation between a TWT scheduled STA and a TWT scheduling AP.

For example, when a value of a negotiation type subfield is 2, a TWT subfield is about a future broadcast TWT SP start time and a TWT element includes at least one broadcast TWT parameter set. It may correspond to providing a broadcast TWT schedule to a TWT scheduled STA by including a TWT element in a broadcast management frame transmitted by a TWT scheduling AP.

For example, when a value of a negotiation type subfield is 3, a TWT subfield is about a future broadcast TWT SP start time and a TWT element includes at least one broadcast TWT parameter set. It may correspond to managing membership of a broadcast TWT schedule by including a TWT element in an individually addressed management frame transmitted by any one of a TWT scheduled STA or a TWT scheduling AP.

When a TWT information frame disabled subfield is configured as 1, it represents that reception of a TWT information frame by a STA is disabled and otherwise, it may be configured as 0.

A wake duration unit subfield represents a unit of a nominal minimum TWT wake duration field. A wake duration unit subfield may be configured as 0 when a unit is 256us and may be configured as 1 when a unit is a TU. When it is not a HE/EHT STA, a wake duration unit subfield may be configured as 0.

A most significant bit (MSB) of a negotiation type field may correspond to a broadcast field. When the broadcast field is 1, at least one broadcast TWT parameter set may be included in a TWT element. When the broadcast field is 0, only one individual TWT parameter set may be included in a TWT element. A TWT element that the broadcast field is configured as 1 may be referred to as a broadcast TWT element.

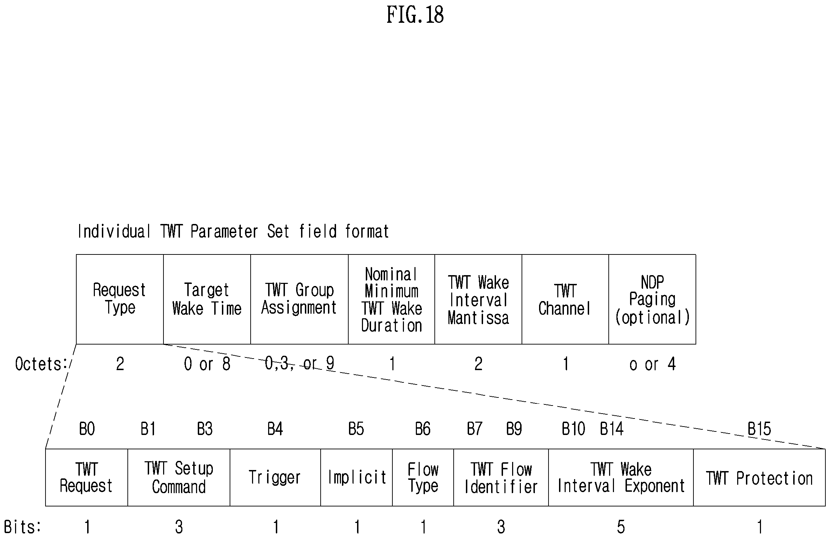

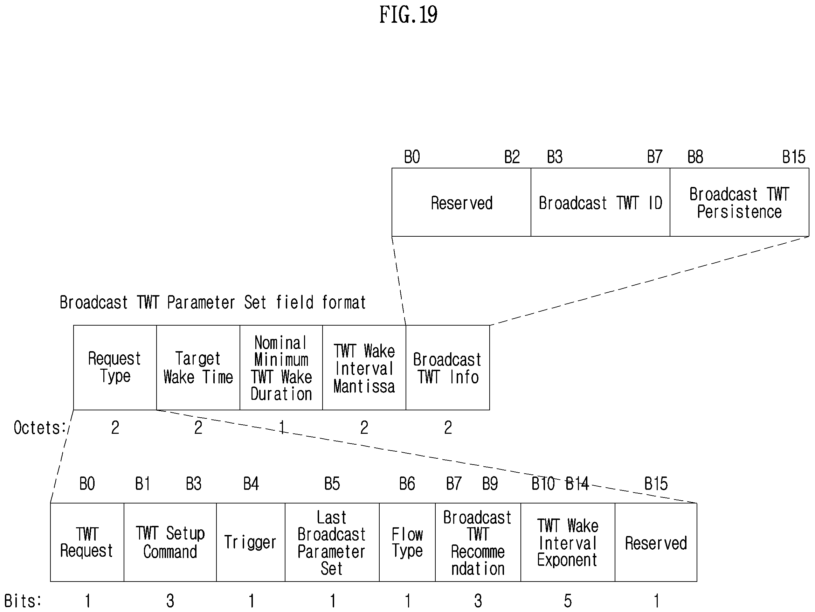

FIG. 18 is a diagram for describing examples of an individual TWT parameter set field format. FIG. 19 is a diagram for describing examples of a broadcast TWT parameter set field format.

A TWT parameter information field included in a TWT element in FIG. 17 may have a different configuration according to an individual TWT or a broadcast TWT.

For an individual TWT, a TWT parameter information field in a TWT element includes a single individual TWT parameter set field.

For a broadcast TWT, a TWT parameter information field in a TWT element includes at least one broadcast TWT parameter set field. Each broadcast TWT parameter set may include specific information on one broadcast TWT.

As shown in FIGS. 18 and 19, an individual TWT parameter set field and a broadcast TWT parameter set field include common subfields.

A request type subfield has the same size in an individual TWT parameter set field and a broadcast TWT parameter set field, but may have a different detailed configuration. It is described later.

A target wake time subfield represents a start time of an individual/broadcast TWT SP expected in the future.

A nominal minimum TWT wake duration subfield represents the minimum unit that a TWT requesting STA is expected to be awaken in order to complete frame exchange related to a TWT flow identifier during a TWT wake interval duration. Here, a TWT wake interval may mean an average time between contiguous TWT SPs expected by a TWT requesting STA.

A TWT Wake Interval Mantissa subfield is a binary value of a TWT wake interval value, which may be indicated in microseconds.

In reference to FIG. 18, a TWT group assignment subfield, a TWT channel and a NDP paging subfield are included only in an individual TWT parameter set field.

A TWT group assignment subfield is provided to a TWT requesting STA by including information on a TWT group to which a STA is assigned. A TWT value in a TWT group may be calculated by using corresponding information. A TWT value of a STA may be the same as a value obtained by multiplying a value of a zero offset and a value of a TWT offset by a value of a TWT unit.

A TWT channel subfield represents a bitmap representing an allowed channel. When transmitted by a TWT requesting STA, a TWT channel subfield may include a bitmap representing a channel which is requested by a STA to be used as a temporary basic channel during a TWT SP. When transmitted by a TWT response STA, a TWT channel subfield may include a bitmap representing a channel that a TWT request is allowed.

A NDP paging subfield is optional and may include an identifier of a paged STA, information related to the maximum number of TWT wake intervals between NDP paging frames, etc.

In reference to FIG. 19, a broadcast TWT information (broadcast TWT info) subfield is included only in a broadcast TWT parameter set field. A broadcast TWT information subfield may include a 3-bit reserved bit, a 5-bit broadcast TWT identifier (ID) subfield and a 8-bit broadcast TWT persistence subfield. A broadcast TWT identifier subfield represents a broadcast ID of a specific broadcast TWT that a STA requests participation or provides a TWT parameter according to a value of a TWT setup command subfield of a TWT element. A broadcast TWT persistence subfield represents the number of TBTTs planned on a schedule of a broadcast TWT.

Next, a detailed configuration of a request type subfield is described.

First, a format of a request type subfield of an individual TWT parameter set field is described by referring to FIG. 18.

A TWT request subfield may represent whether it is a requesting STA or a response STA. When that value is 1, it may represent that it is a TWT requesting STA or a scheduling STA and when that value is 0, it may represent that it is a TWT responding STA or a scheduling AP.

A TWT setup command subfield may represent a command such as Request, Suggest, Demand, Accept, Alternate, Dictate, Reject, etc.

A trigger subfield represents whether a trigger frame will be used in a TWT SP. When that value is 1, a trigger may be used and when that value is 0, a trigger may not be used.

An implicit subfield may represent whether it is an implicit TWT or an explicit TWT. When that value is 1, it may represent an implicit TWT and when that value is 0, it may represent an explicit TWT.

A flow type subfield may represent an interaction type between a TWT requesting STA (or a TWT scheduled STA) and a TWT responding STA (or a TWT scheduling AP). When that value is 1, it may mean an announced TWT that a STA transmits a wakeup signal to an AP by transmitting a PS-Poll or automatic power save delivery (APSD) trigger frame before a frame, not a trigger frame, is transmitted from an AP to a STA. When that value is 0, it may mean an unannounced TWT.

A TWT flow identifier subfield may include a 3-bit value which uniquely identifies specific information on a corresponding TWT request in other request performed between the same TWT requesting STA and TWT responding STA pair.

A TWT wake interval exponent subfield may configure a TWT wake interval value in a binary microsecond unit. For an individual TWT, it may mean an interval between individual TWT SPs. A TWT wake interval of a requesting STA may be defined as [TWT Wake Interval Mantissa * 2*TWT Wake Interval Exponent].

A TWT protection subfield may represent whether to use a TWT protection mechanism. When that value is 1, a TXOP in a TWT SP may be started with a NAV protection mechanism such as a (MU)RTS/CTS or a CTS-to-self frame and when that value is 0, a NAV protection mechanism may not be applied.

In reference to FIG. 19, some of subfields of a request type subfield of a broadcast TWT parameter set field are common with subfields of a request type subfield of an individual TWT parameter set field, so a description thereof is omitted. Subfields included only in a broadcast TWT parameter set are described below.

A last broadcast parameter set subfield represents whether it is a last broadcast TWT parameter set. When that value is 1, it may represent that it is a last broadcast TWT parameter set and when that value is 0, it may represent that a next broadcast TWT parameter set exists.

A broadcast TWT recommendation subfield may represent recommendations for a frame type transmitted by an AP during a broadcast TWT SP as a value of 1-7.

A last 1 bit of a request type subfield of a broadcast TWT parameter set field may be reserved.

A method of configuring a restricted TWT related TWT information

As wired/wireless traffic has recently exploded, traffic sensitive to latency has also increased significantly. Traffic sensitive to latency includes real-time audio/video transmission, and with the spread of multimedia devices, the need to support it in a wireless environment has increased. However, compared to a wired environment, there are many things to consider in a wireless environment to support traffic sensitive to latency. It is because transmission speed in a wireless environment is lower than that in a wired environment and interference issues from the surroundings should be also considered. In particular, in a WLAN system, multiple STAs should compete equally for occupying the medium in an Industry-Science-Medical (ISM) band, so compared to a cellular communication network based on radio resource scheduling by a central base station, it is relatively more difficult to support traffic sensitive to latency. The present disclosure describes a new method for supporting traffic sensitive to latency in a WLAN system.

In the present disclosure, latency may mean latency defined in a IEEE 802.11 series standard. For example, it may mean a time until, after a frame to be transmitted is entered to a queue of a MAC layer of a transmitting STA, a transmission of the transmitting STA successfully ends in a PHY layer, the transmitting STA receives ACK/block ACK, etc. from a receiving STA and a corresponding frame is deleted from the queue of the MAC layer of the transmitting STA. In addition, in the present disclosure, a non-AP STA which supports transmission of latency sensitive data may be referred to as a low latency STA. And, data other than latency sensitive data may be referred to as regular data.

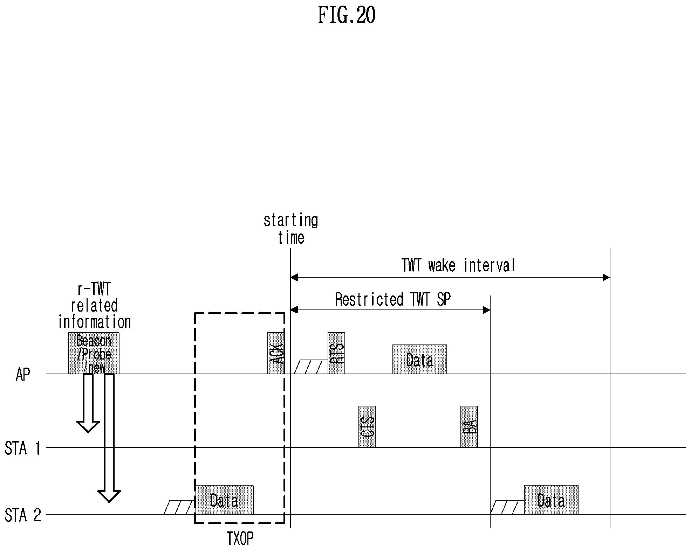

FIG. 20 is a diagram for describing an example of a restricted TWT operation.

A restricted TWT (r-TWT) may support preferentially securing a data transmission possibility for a low latency STA compared to other STAs by making an AP configure a special broadcast TWT for a low latency STA transmitting latency sensitive data. A STA may establish membership for at least one r-TWT schedule for an AP. Here, a r-TWT agreement may be established by the same process as a broadcast TWT agreement and a broadcast TWT element for it may be defined to include a r-TWT parameter set field. For example, a r-TWT parameter set may refer to a specific broadcast TWT parameter set field which is distinct from other broadcast TWT parameter set fields. In other words, a r-TWT parameter set field may correspond to a special case of a broadcast TWT parameter set field. In addition, an AP may announce a r-TWT SP.

Basically, when other STA which supports a r-TWT operation is a TXOP holder, the TXOP should be ended before a start time of a r-TWT SP advertised in a combined AP. Accordingly, a STA related to a corresponding r-TWT (i.e., a low latency STA) may transmit or receive traffic preferentially compared to the other STAs in a r-TWT SP.

In the present disclosure, as described above, a low latency STA related to a specific r-TWT is referred to as a member r-TWT scheduled STA and other STAs are referred to as a non-member STA. A non-member STA may be a STA which has a capability to support a r-TWT operation, but is not a member of any r-TWT or which supports a r-TWT operation and is a member of other r-TWT or which has no capability to support a r-TWT operation.

A STA (e.g., a low latency STA) which supports a restricted SP (or r-TWT SP) operation of a broadcast TWT may inform an AP that latency sensitive data should be transmitted based on a r-TWT operation. If an AP supports a r-TWT operation/mode, an AP may transmit a frame including scheduling information of TWTs requested by each STA to a low latency STA and other STA(s). For example, in order to perform an operation for a r-TWT, non-AP STAs may acquire r-TWT-related information from an AP through a beacon frame, a probe response frame, a (re)association response frame or other frames in a nondefined format (e.g., a frame for broadcast, advertisement and announcement).

According to a restricted TWT operation, a NAV such as a (MU) RTS/CTS or CTS-to-self or a quiet interval, etc. may be used to secure a separate TXOP (i.e., access of other STAs is restricted) in a r-TWT SP. Before a specific r-TWT SP starts, if there is a TXOP of other STA (i.e., a non-member STA) other than a STA having a membership for the specific r-TWT schedule, it should be stopped. And, a TXOP of the other STA (i.e., a non-member STA) may be additionally performed after the specific r-TWT SP ends. It may be referred to as a TXOP rule-based operation for a r-TWT SP of a non-member STA.

In an example of FIG. 20, STA1 may correspond to a low latency STA and STA2 may correspond to a STA which transmits or receives regular data. An AP may inform STAs of r-TWT-related information through a frame such as a beacon, etc. In this case, according to a TXOP rule for a r-TWT SP, STA2, a TXOP holder, should terminate a corresponding TXOP before a start time of any r-TWT SP advertised by an associated AP.

A method of configuring/defining new TWT information in relation to restricted TWT will be described as below.

As described above, the TWT information frame can be used for operations such as suspending or resuming the allocated TWT SP for a certain period of time in an individual TWT or broadcast TWT. In this regard, when the value of all TWT subfields (i.e., all TWT fields) in the TWT information field as shown in FIG. 16 is 1, the STA (e.g., AP STA / non-AP STA) may recognize when to resume through the value of the next TWT subfield (i.e., next TWT field).

However, there is no space in the existing TWT information field to separately indicate information related to the r-TWT SP.

For example, in the case of the existing TWT information field, since the value of the TWT flow Identifier subfield is reserved when the value of the all TWT subfield is 1, it may be indicated whether the TWT SP corresponds to an r-TWT SP rather than an individual TWT/broadcast TWT SP, using the value of the corresponding subfield.

In the case of the above-described method, information related to the restricted TWT may not be sufficiently included. In addition, the existing TWT information frame only includes information related to broadcast TWT, and this may correspond to information unrelated to restricted TWT.

Considering this, a method of signaling a new TWT information frame / TWT information field containing information related to the r-TWT SP may be needed. Through this signaling, information transfer between STA(s) supporting restricted TWT and AP may be made clear.

Therefore, the present disclosure proposes a method of configuring/defining new TWT information for r-TWT SP.

Specifically, a method of signaling the r-TWT information field to indicate that the corresponding TWT is an r-TWT SP and a method of indicating whether data is transmitted and received between an AP and an STA (e.g., UL/DL transmission and reception) or between STAs (e.g., Peer to Peer, P2P transmission and reception) within the r-TWT SP will be proposed.

The names or configuration order of fields/subfields described below are examples for clarity of explanation, and the proposal of the present disclosure is not limited thereto. That is, the names or configuration order of fields/subfields described below may be changed and applied.

Additionally, STAs described below may include AP STAs or non-AP STAs.

The embodiments described below are divided for clarity of explanation, and each of the embodiments may be applied independently, or a part/entire configuration of one embodiment may be applied by combining/combining/substituting a portion of the entire configuration of another embodiment.

### Embodiment 1

A method of defining/designing a TWT information frame/field for indicating/transmitting the r-TWT SP-related information described above is proposed in this embodiment.

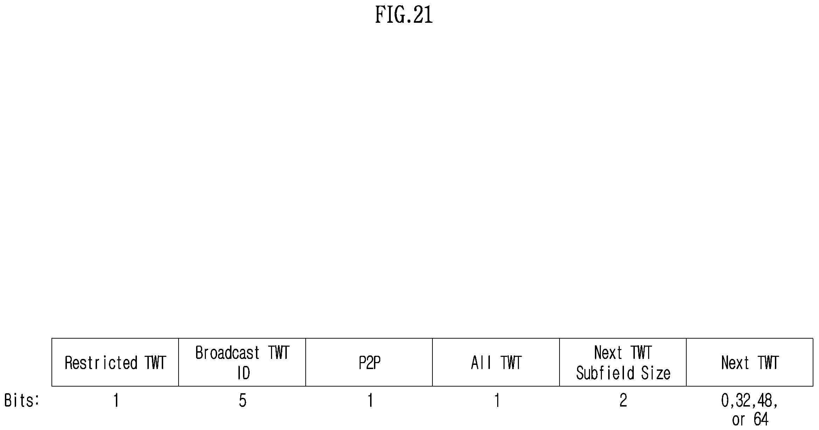

FIG. 21 illustrates an example of an r-TWT related information frame according to the present disclosure.

Referring to FIG. 21, the r-TWT related information frame may correspond to a newly designed/defined r-TWT information frame to indicate information related to the r-TWT SP.

The r-TWT information frame may be transmitted by the STA to request or deliver information related to the r-TWT SP. The action frame of the r-TWT information frame may include an r-TWT information field.

For example, the r-TWT information frame (or r-TWT information field) may include a 1-bit restricted TWT subfield, a 5-bit broadcast TWT ID subfield, 1- bit P2P subfield, 1-bit all TWT subfield, 2-bit next TWT subfield size subfield, and 0/32/48/64-bit next TWT subfields.

The restricted TWT subfield may indicate whether the scheduled TWT SP is a broadcast TWT or a restricted TWT. That is, the restricted TWT subfield may be used to distinguish whether a scheduled TWT SP corresponds to an r-TWT SP.

If the value of the restricted TWT subfield is 1, this may indicate an r-TWT SP, and if the value of the restricted TWT subfield is 0, this may indicate a broadcast TWT SP. In this regard, it is possible that the value of the restricted TWT subfield is set opposite to the case described above.

The broadcast TWT ID subfield can be used to represent TWT membership of STA(s) supporting restricted TWT. Based on the corresponding subfield, information on which broadcast TWT ID the r-TWT SP allocated to the STA that the r-TWT SP announced from the AP is may be confirmed.

The P2P subfield may indicate whether to perform a P2P operation within the scheduled TWT SP.

If the value of the P2P subfield is 1, it may indicate that P2P operation between STAs supporting restricted TWT (i.e., r-TWT scheduled STAs) is performed during r-TWT SP. If the value of the P2P subfield is 0, it may indicate that UL/DL data transmission and reception between the AP and the STA is performed during r-TWT SP, rather than P2P operation. In this regard, it is possible for the value of the P2P subfield to be set opposite to the case described above.

The all TWT subfield may indicate whether to reschedule all TWT SPs allocated for the STA.

If the all TWT subfield is set to 1, information on the rescheduled TWT SP may be notified/indicated through the value of the next TWT subfield. If all TWT SPs are not rescheduled, the all TWT subfield may be set to 0.

In this regard, suspension information of r-TWT / non r-TWT may be indicated through a combination of the above-described restricted TWT subfield and all TWT subfield.

For example, if the all TWT subfield is set to 0 and the restricted TWT subfield is set to 1, it may indicate that specific r-TWT scheduling is suspended. If the all TWT subfield is set to 1 and the restricted TWT subfield is set to 1, it may indicate that all r-TWT scheduling is suspended. If the all TWT subfield is set to 1 and the restricted TWT subfield is set to 0, it may indicate that all non r-TWT scheduling is suspended.

The next TWT subfield size subfield may indicate the size of the next TWT subfield. If the values of the next TWT subfield size subfield are 0, 1, 2, and 3, it may indicate that the sizes of the next TWT subfield are 0, 32, 48, and 64, respectively.

The next TWT subfield may indicate a specific time for the next TWT of the r-TWT SP. The next TWT subfield may have a variable length depending on the value of next TWT subfield size.

For example, if the all TWT subfield is set to 1 and the next TWT subfield is set to 0, the suspension of the r-TWT SP may be indicated. If the all TWT subfield is set to 1 and the next TWT subfield is set to a value greater than 0 (e.g., Tᵣₑₛᵤₘₑ), It may be indicated that the r-TWT will resume from the first allocated r-TWT SP after the next TWT (i.e., after the indicated time).

In examples according to the present disclosure, Tᵣₑₛᵤₘₑ may correspond to a resume timing reference and may have a value based on the TSF.

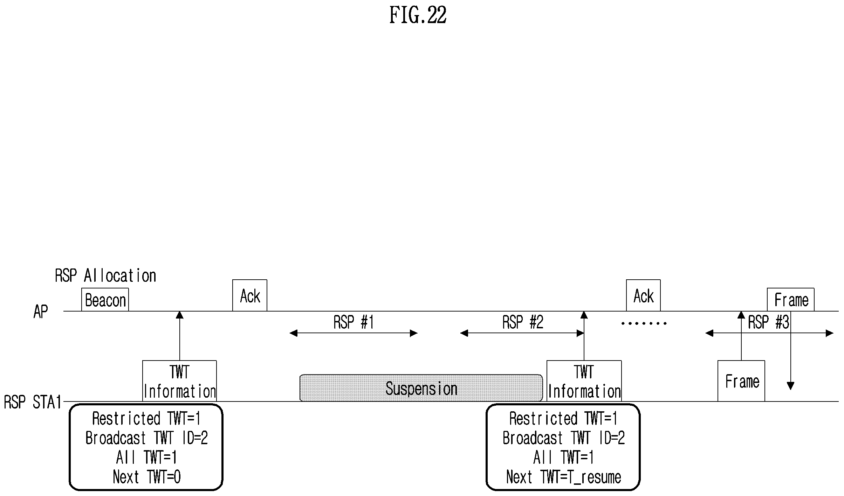

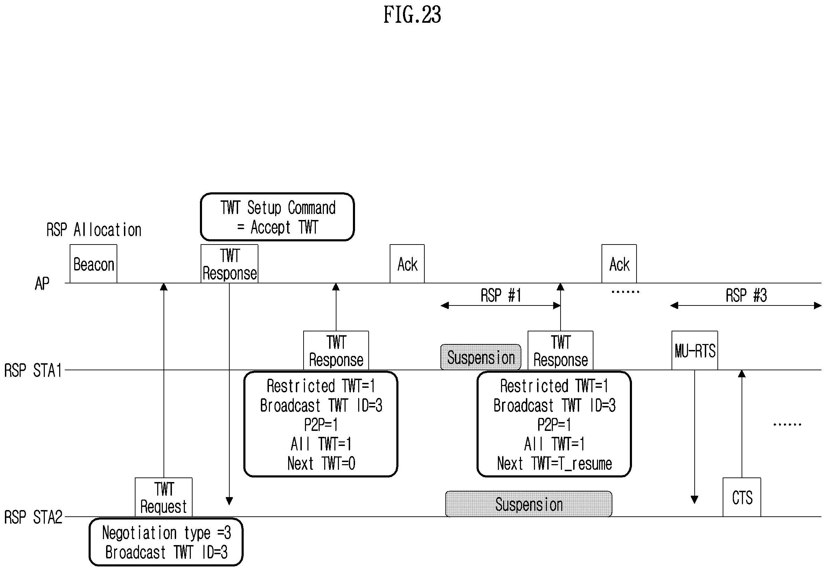

In the following, the operation between the r-TWT scheduling AP and the r-TWT scheduled STA based on the r-TWT related information frame described above will be described through FIGS. 22 and 23.

FIG. 22 illustrates an example of a restricted TWT operation based on an r-TWT information frame according to the present disclosure.

Referring to FIG. 22, an example r-TWT information frame for suspension and resumption of r-TWT SP (RSP) is shown. In FIG. 22, AP corresponds to r-TWT scheduling AP, and RSP STA 1 may correspond to r-TWT scheduled STA.

Additionally, in FIG. 22, TWT information may be transmitted and received in a TWT information frame format. This may correspond to the r-TWT information frame/field described above, or may include the r-TWT information frame/field.

First, the AP may announce r-TWT related information to the STA(s), including RSP STA 1, that has been assigned the r-TWT SP through a management frame such as a beacon frame. Here, r-TWT related information may include RSP allocation information, etc.

If RSP STA 1 does not utilize (i.e., suspend) the allocated r-TWT SP, it may transmit TWT information to the AP.

As a specific example, with regard to the r-TWT information frame transmitted by RSP STA 1 to the AP, the value of the restricted TWT subfield may be set to 1, the value of the broadcast TWT ID subfield may be set to 2, the value of the all TWT subfield may be set to 1, and the value of the next TWT subfield may be set to 0 (i.e., suspension).

In response to the corresponding TWT information, RSP STA 1 may receive an ACK from the AP. RSP STA 1, which has received the ACK, does not transmit or receive data from the r-TWT SP (e.g., RSP #1, RSP #2) until the r-TWT SP resumes. That is, RSP may be suspended or temporarily suspended.

To indicate that RSP STA 1 resumes the corresponding r-TWT SP, the RSP STA 1 may transmit TWT information to the AP by setting the value of the next TWT subfield to the desired resuming time (e.g., Tᵣₑₛᵤₘₑ).

As a specific example, with regard to the r-TWT information frame transmitted by RSP STA 1 to the AP, the value of the restricted TWT subfield may be set to 1, the value of the broadcast TWT ID subfield may be set to 2, the value of the all TWT subfield may be set to 1, and the value of the next TWT subfield may be set to Tᵣₑₛᵤₘₑ (e.g. RSP # 3 start time).

In response to the corresponding TWT information, RSP STA 1 may receive an ACK from the AP. RSP STA 1, which has received the corresponding ACK, may perform data transmission and reception starting from RSP #3, which is the r-TWT SP (i.e., next r-TWT SP) allocated after the time Tᵣₑₛᵤₘₑ. That is, transmission and reception of UL/DL data within the r-TWT SP between the AP and RSP STA 1 may be resumed in the allocated r-TWT SP(s) based on time Tᵣₑₛᵤₘₑ.

FIG. 23 illustrates another example of restricted TWT operation based on the r-TWT information frame according to the present disclosure.

Referring to FIG. 23, an example of an r-TWT information frame for suspending and resuming an r-TWT SP (RSP) / sharing P2P operation information between r-TWT SPs (RSPs) is shown. In FIG. 23, AP corresponds to r-TWT scheduling AP, and RSP STA 1 and RSP STA 2 may correspond to r-TWT scheduled STA.

Additionally, in FIG. 23, TWT information may be transmitted and received in a TWT information frame format. This may correspond to the r-TWT information frame/field described above, or may include the r-TWT information frame/field.

First, the AP may announce r-TWT related information to STAs, including RSP STA 1, that has been assigned an r-TWT SP through a management frame such as a beacon frame. Here, r-TWT related information may include RSP allocation information, etc. Additionally or alternatively, r-TWT SP may be configured for P2P transmission and reception, or P2P transmission and reception may be performed within a specified TXOP through separate signaling for P2P transmission and reception within the r-TWT SP (e.g., P2P support mode of the triggered TXOP sharing procedure).

To obtain the same membership as the RSP included in the management frame such as the beacon frame, RSP STA 2 may send a TWT request to the AP by specifying the same broadcast TWT ID value and setting the Negotiation type value to 3.

In response to the TWT request, the AP may set the TWT setup command to accept TWT and transmit a TWT response to RSP STA 2.

Afterwards, if RSP STA 1 does not utilize (i.e., suspend) the allocated r-TWT SP, it may transmit TWT information to the AP.

As a specific example, with regard to the r-TWT information frame transmitted by RSP STA 1 to the AP, the value of the restricted TWT subfield may be set to 1, the value of the broadcast TWT ID subfield may be set to 3, the value of the P2P subfield may be set to 1, the value of the all TWT subfield may be set to 1, and the next TWT The value of the subfield may be set to 0 (i.e., suspension).

In response to the corresponding TWT information, RSP STA 1 may receive an ACK from the AP. RSP STA 1, which has received the ACK, does not transmit or receive data in the r-TWT SP until it resumes the r-TWT SP. In other words, RSPs related to P2P operations may be suspended or temporarily suspended.

The AP that has received the above TWT information may inform RSP STAs with the same broadcast TWT ID that RSP is suspended or suspended. For example, the AP may announce through a management frame such as a beacon frame that the P2P operation within the r-TWT SP to be performed by RSP STA 1 is suspended or paused until resumed, to RSP STA(s) (including RSP STA 2) assigned an r-TWT SP with RSP STA 1, i.e., with the same broadcast TWT ID.

RSP STA 2, which has received this information, does not perform data transmission and reception (particularly P2P transmission and reception) in the r-TWT SP (e.g., RSP #1, RSP #2) until the corresponding r-TWT SP is resumed. That is, RSPs related to P2P operations may be suspended or temporarily suspended.

Additionally or alternatively, since the P2P operation is performed by a trigger from the AP, the AP may not notify other STA(s) that the RSP related to the P2P operation is suspended.

Afterwards, when RSP STA 1 wishes to transmit and receive data with RSP STA 2 through r-TWT SP (i.e., when it wishes to resume r-TWT SP related to P2P operation), RSP STA 1 may transmit TWT information to the AP by setting the value of the next TWT subfield to the desired time (i.e., Tresume) and setting the value of the P2P subfield to 1.

As a specific example, with regard to the r-TWT information frame transmitted by RSP STA 1 to the AP, the value of the restricted TWT subfield may be set to 1, the value of the broadcast TWT ID subfield may be set to 2, the value of the all TWT subfield may be set to 1, and the value of the next TWT subfield may be set to Tᵣₑₛᵤₘₑ (e.g. RSP # 3 start time).

In response to the corresponding TWT information, RSP STA 1 may receive an ACK from the AP. RSP STA 1, which has received the ACK, may transmit and receive data between RSP STA 1 and RSP STA 2 from RSP #3, which is the r-TWT SP (i.e., next r-TWT SP) allocated after the time Tresume. That is, the P2P operation between RSP STA 1 and RSP STA 2 may be resumed in the allocated r-TWT SP(s) based on the time Tresume. In this case, transmission and reception of frames, etc. may be performed between RSP STA 1 and RSP STA 2 in the corresponding r-TWT SP(s). For example, within RSP #3, RSP STA 1 may transmit MU-RTS to RSP STA 2, and RSP STA 2 may transmit CTS to RSP STA 1.

The AP that has received the above TWT information may inform RSP STAs with the same broadcast TWT ID that RSP is resumed. For example, the AP may announce the resumption of P2P operation within the r-TWT SP to be performed by RSP STA 1 through a management frame such as a beacon frame, to RSP STA(s) (including RSP STA 2) assigned an r-TWT SP with RSP STA 1, i.e., with the same broadcast TWT ID.

RSP STA 2, which has received this information, may perform data transmission and reception (particularly, P2P transmission and reception) at the corresponding RSP (e.g., RSP #3, the first RSP after Tᵣₑₛᵤₘₑ).

Additionally or alternatively, the AP may provide information for triggering a P2P operation to RSP STA 2 without announcing other STA(s) that the RSP related to the P2P operation is resumed.

In relation to the r-TWT information frame/field in FIG. 21 described above, the restricted TWT subfield and the P2P subfield may be expressed as one subfield.

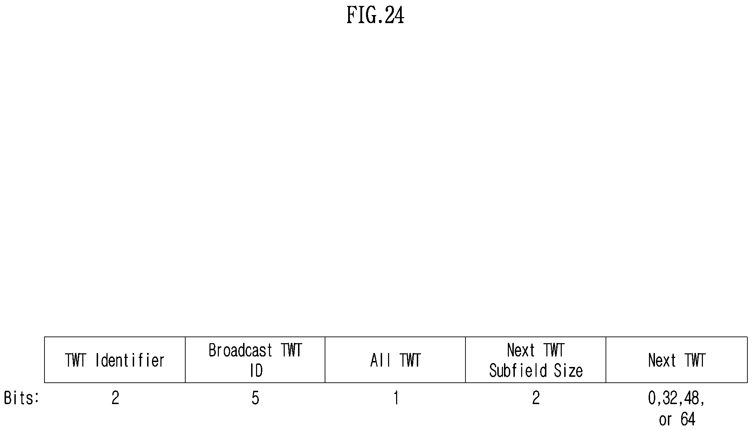

FIG. 24 illustrates another example of an r-TWT related information frame according to the present disclosure.

Referring to FIG. 24, the restricted TWT subfield and P2P subfield in FIG. 21 may be expressed (integrated) as a TWT identifier subfield.

For example, the r-TWT information frame (or r-TWT information field) may include a 2-bit TWT identifier subfield, a 5-bit broadcast TWT ID subfield, a 1-bit all TWT subfield, a 2-bit next TWT subfield size subfield, and a 0/32/48/64-bit next TWT subfield.

The TWT identifier subfield may indicate/distinguish information on whether the scheduled TWT SP is for broadcast TWT, restricted TWT, or P2P operation within restricted TWT.

For example, setting the value of the TWT identifier subfield to 0 may indicate that the scheduled TWT SP is for broadcast TWT. Setting the value of the TWT identifier subfield to 1 may indicate that the scheduled TWT SP is for transmission and reception of UL/DL data within the restricted TWT. Setting the value of the TWT identifier subfield to 2 may indicate that the scheduled TWT SP is for data transmission and reception based on P2P operation within the restricted TWT. Setting the value of the TWT identifier subfield to 3 may be reserved.

Additionally or alternatively, with respect to the r-TWT information frame/field in FIG. 21 described above, cases where the restricted TWT subfield is not included may also be considered.

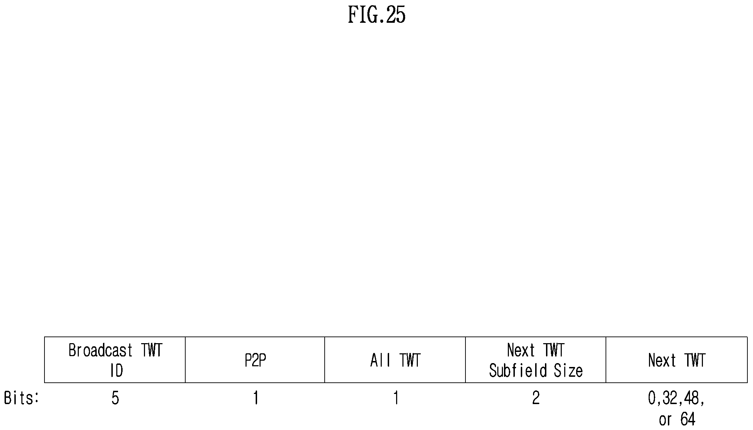

FIG. 25 illustrates another example of an r-TWT related information frame according to the present disclosure.

Referring to FIG. 25, the restricted TWT subfield in FIG. 21 may be excluded from the r-TWT information frame/field.

For example, the r-TWT information frame (or r-TWT information field) may include a 5-bit broadcast TWT ID subfield, 1-bit P2P subfield, a 1-bit all TWT subfield, a 2-bit next TWT subfield size subfield, and a 0/32/48/64-bit next TWT subfield.

In this case, since the r-TWT information frame does not indicate whether the TWT SP is for a restricted TWT, only the information of the TWT SP corresponding to the r-TWT SP may be transmitted.

That is, the r-TWT information frame/field in FIG. 21 may contain/transmit information on the broadcast TWT SP, while the r-TWT information frame/field in FIG. 25 may be designed/defined to contain/carry only information on the r-TWT SP.

Additionally or alternatively, with respect to the r-TWT information frame/field in FIG. 21 described above, a response requested subfield and a next TWT request subfield may be added.

FIG. 26 illustrates another example of an r-TWT related information frame according to the present disclosure.

Referring to FIG. 26, the response requested subfield and next TWT request subfield may be included in the r-TWT information frame/field in FIG. 21.

For example, the r-TWT information frame (or r-TWT information field) may include a 1-bit restricted TWT subfield, a 5-bit broadcast TWT ID subfield, 1- bit response requested subfield, 1-bit next TWT request subfield, 1-bit P2P subfield, 1-bit all TWT subfield, 2-bit next TWT subfield size subfield, and a 0/32/48/64-bit next TWT subfield.

The response requested subfield may be set to 1 or 0 to indicate the presence or absence of a response upon receipt of a TWT information frame.

That is, the response requested subfield may indicate whether the transmitter of a frame including the TWT information field requests to transmit a TWT information frame in response to the frame. The response requested subfield may be set to 0 to request the receiving end not to transmit a TWT information frame in response to the frame. The response requested subfield may be set to 1 to request the receiving end to transmit a TWT information frame in response to the frame.

By setting the next TWT request subfield to 1 or 0, the presence or absence of a request for reception of a TWT information frame including the next TWT subfield set to a value greater than 0 may be indicated. That is, the next TWT Request subfield may be set to 1 to indicate that the TWT information frame is a request for delivery of a TWT information frame including a next TWT field with a length other than 0. Otherwise, the next TWT Request subfield may be set to 0.

### Embodiment 2

In the above-described Embodiment 1, r-TWT related information frame/field for indicating suspension/resumption of r-TWT SP and P2P operation was described.

In relation to this, a method of defining/designing a TWT information frame/field by additionally considering information about the expansion/extension of the r-TWT SP is proposed in this embodiment.

For example, the subfield related to the expansion/extension of the r-TWT SP may be designed/defined to be included in the r-TWT information frame/field in FIGS. 21, 24, 25, and/or 26 described above.

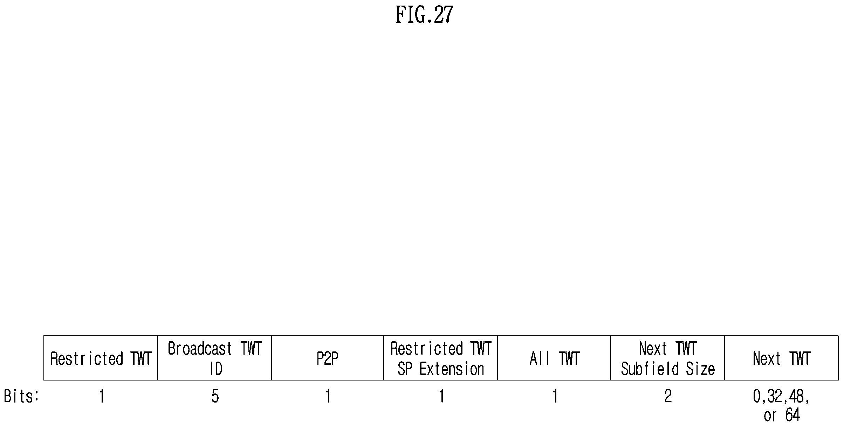

FIG. 27 illustrates another example of an r-TWT related information frame according to the present disclosure.

Referring to Figure 27, for the r-TWT information frame/field in FIG. 21, a subfield related to the extension of r-TWT SP, that is, a restricted TWT SP extension subfield, may be further included.

For example, the r-TWT information frame (or r-TWT information field) may include a 1-bit restricted TWT subfield, a 5-bit broadcast TWT ID subfield, 1- bit P2P subfield, 1-bit restricted TWT SP extension subfield, 1-bit all TWT subfield, 2-bit next TWT subfield size subfield, and a 0/32/48/64-bit next TWT subfield.

The restricted TWT SP extension subfield may include information on the extension/extension of the end time of the initially configured r-TWT SP.

For example, when the STA transmits to the AP an r-TWT information frame with the value of the restricted TWT SP extension subfield set to 1, this may mean that the STA transmit a request to the AP to extend the end time of the r-TWT SP currently in progress. At this time, setting the value of next TWT in the corresponding r-TWT information frame to a value greater than 0 (e.g., T_{end}) may mean that a specific end timing is indicated.

In examples according to the present disclosure, T_{end} may correspond to an extended end timing and may have a value based on the TSF.

For another example, when the AP transmits to the STA an r-TWT information frame in which the value of the restricted TWT SP extension subfield is set to 1, this may mean that the AP announces that the end timing of the r-TWT SP currently in progress has been extended to the value of the next TWT subfield.

In the examples of the above two cases, the duration from the postponed r-TWT SP start timing to the extended r-TWT SP end point may not exceed the duration of the r-TWT SP initially scheduled by the AP. Additionally or alternatively, upon extension of an r-TWT SP, it may not overlap (i.e., overlap) with a subsequently scheduled TWT SP.

Considering this, if at least one of the two cases below matches, the AP shall reject the r-TWT SP extension request by the STA.

- Case 1. A case that the STA requests to extend the r-TWT SP end timing to have a longer duration than the duration of the r-TWT SP initially scheduled by the AP.

- Case 2. A case that the extension request for r-TWT SP by the STA duplicates (i.e., overlaps) with the TWT SP scheduled after the current r-TWT SP.

In this regard, in order to confirm/deliver that the extension request for the r-TWT SP by the STA is valid, the AP may need to transmit an ACK for the extension request to the STA. Through the ACK, the STA may confirm that the extension request for the r-TWT SP has been accepted/permitted by the AP and the end timing of the r-TWT SP has been extended.

Regarding the value of the specific restricted TWT SP extension subfield, the following information may be indicated based on the all TWT subfield, next TWT subfield, and restricted TWT SP extension subfield described above.

For example, if the value of the all TWT subfield is set to 1, the value of the next TWT subfield is set to 0, and the value of the restricted TWT SP extension subfield is set to 0, it may indicate/mean a suspension of the the r-TWT SP. If the value of the all TWT subfield is set to 1, the value of the next TWT subfield is set to a value greater than 0 (e.g. Tᵣₑₛᵤₘₑ), and the value of the restricted TWT SP extension subfield is set to 0, it may indicate/mean that the r-TWT SP is resumed from the first r-TWT SP allocated after the value of the next TWT subfield (i.e., Tᵣₑₛᵤₘₑ). If the value of the all TWT subfield is set to 1, the value of the next TWT subfield is set to a value greater than 0 (e.g. T_{end}), and the value of the restricted TWT SP extension subfield is set to 1, the value of the next TWT subfield (i.e., T_{end}) may indicate/mean the end timing for the extended r-TWT SP. If the value of the all TWT subfield is set to 0, the value of the next TWT subfield is set to a value greater than 0 (e.g. Tend), and the value of the restricted TWT SP extension subfield is set to 1, the value of the next TWT subfield (i.e., T_{end}) may indicate/mean the end timing requested (from the STA to the AP) for the extended r-TWT SP.

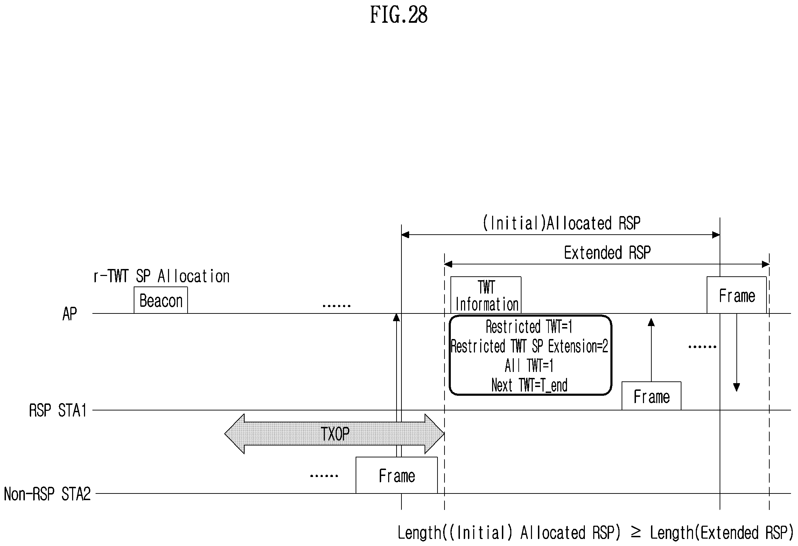

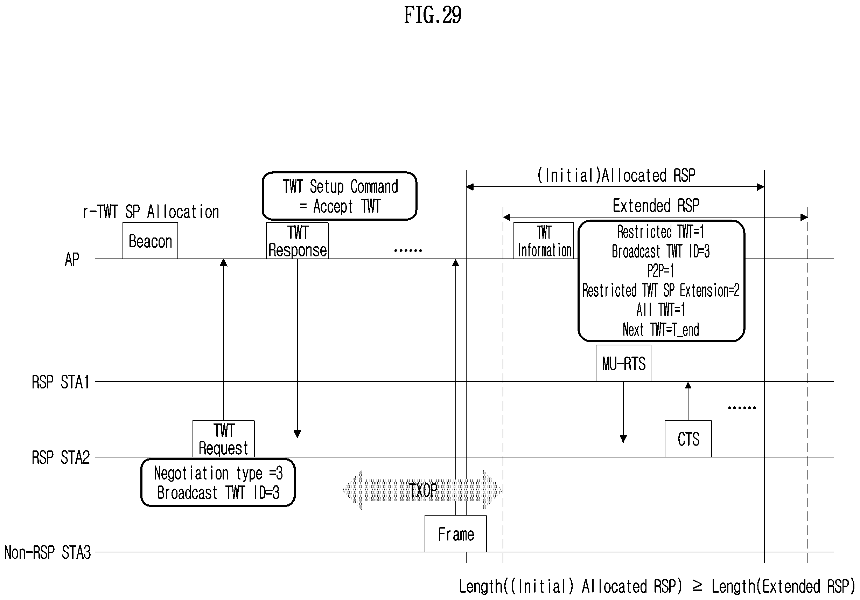

Hereinafter, considering the extended r-TWT SP described above through FIGS. 28 and 29, the operation between r-TWT scheduling AP and r-TWT scheduled STA based on r-TWT related information frame is described.

In FIGS. 28 and 29, TWT information can be transmitted and received in a TWT information frame format. This may correspond to the r-TWT information frame/field described above, or may include the r-TWT information frame/field.

FIG. 28 illustrates an example of restricted TWT operation considering the extended r-TWT SP according to the present disclosure.

Referring to Figure 28, this illustrates the signaling method of TWT information in the case where an extended r-TWT SP is generated by an STA that does not support r-TWT (i.e., does not belong to the r-TWT SP).

First, the AP may announce r-TWT related information to the STA(s) assigned to the r-TWT SP through a management frame such as a beacon frame. Here, r-TWT related information may include RSP allocation information, etc.

As described above, the TXOP of an STA that does not belong to the r-TWT SP shall suspend before any r-TWT SP starts. For example, non-RSP STA 2 does not belong to that RSP, so TXOP shall be suspended. However, in cases where the r-TWT SP may not be prioritized, such as when the TXOP of non-RSP STA 2 is for latency-sensitive traffic, the start timing of the r-TWT SP is postponed, and accordingly the end timing of the r-TWT SP may also be postponed. This may be referred to as extended r-TWT SP.

In the example of FIG. 28, an extended RSP occurs due to the TXOP of non-RSP STA 2, and it may be indicated that the initially allocated RSP is extended through TWT information transmitted by the AP. At this time, the length of the initially allocated RSP shall be greater than or equal to the extended RSP.

As a specific example, regarding the r-TWT information frame transmitted by the AP, the value of the restricted TWT subfield may be set to 1, the value of the restricted TWT SP extension subfield may be set to 1, the value of the all TWT subfield may be set to 1, and the value of the next TWT subfield may be set to T_{end} (i.e., the end timing of the extended RSP). In other words, the AP may set the value of the restricted TWT SP extension subfield to 1 to indicate that the current r-TWT SP is extended and a suspension timing of the r-TWT SP extended through T_{end}, which is the value of the next TWT subfield.

If the r-TWT SP is allocated to multiple STAs based on broadcast TWT, the receiver address (RA) field of the corresponding TWT information may be set as a broadcast address and transmitted in a broadcast method.

The RSP STA(s) that received the ACK for the above TWT information (e.g., RSP STA 1) may transmit and receive data within the RSP based on the end timing of the r-TWT SP being extended to the T_{end} timing.

FIG. 29 illustrates another example of restricted TWT operation considering the extended r-TWT SP according to the present disclosure.

Referring to Figure 29, this illustrates the signaling method of TWT information in a case where an extended r-TWT SP is generated by an STA that does not support r-TWT (i.e., does not belong to the r-TWT SP) and considering P2P operation between RSP STAs.

First, the AP may announce r-TWT related information to the STA(s) assigned to the r-TWT SP through a management frame such as a beacon frame. Here, r-TWT related information may include RSP allocation information, etc. Additionally or alternatively, r-TWT SP may be set for P2P transmission and reception, or P2P transmission and reception may be performed within a specified TXOP through separate signaling for P2P transmission and reception within the r-TWT SP (e.g., P2P support mode of the triggered TXOP sharing procedure).

In order to obtain the same membership as the RSP included in the management frame such as the beacon frame, RSP STA 2 may transmit a TWT request to the AP by specifying the same broadcast TWT ID value and setting the Negotiation type value to 3.

In response to the TWT request, the AP may set the TWT setup command to accept TWT and transmit a TWT response to RSP STA 2.

As described above, the TXOP of an STA that does not belong to the r-TWT SP shall suspend before any r-TWT SP starts. For example, non-RSP STA 3 does not belong to that RSP, so TXOP shall be suspended. However, as in the case of a TXOP of non-RSP STA 3 for latency-sensitive traffic, in cases where the r-TWT SP may not be prioritized, the start timing of the r-TWT SP may be postponed, and the end timing of the r-TWT SP may also be postponed accordingly.

In the example of FIG. 29, an extended RSP occurs due to the TXOP of non-RSP STA 3, and it may be indicated that the initially allocated RSP is extended through TWT information transmitted by the AP. At this time, the length of the initially allocated RSP must be greater than or equal to the extended RSP.

As a specific example, regarding the r-TWT information frame transmitted by the AP, the value of the restricted TWT subfield may be set to 1, the value of the broadcast TWT ID subfield may be set to 3, the value of the P2P subfield may be set to 1, the value of the restricted TWT SP extension subfield may be set to 1, the value of the all TWT subfield may be set to 1, and the value of the next TWT subfield may be set to T_{end} (i.e., the end timing of the extended RSP). In other words, the AP may set the value of the restricted TWT SP extension subfield to 1 to indicate that the current r-TWT SP through which data transmission and reception between RSP STA 1 and RSP STA 2 is performed is extended, and the end timing of the extended r-TWT SP may be indicated through T_{end}, which is the value of the next TWT subfield.

If the r-TWT SP is allocated to multiple STAs based on broadcast TWT, the receiver address (RA) field of the TWT information may be set to a broadcast address and transmitted in a broadcast method.

The RSP STA(s) that received the ACK for the above TWT information (e.g., RSP STA 1) may perform transmission and reception according to P2P operation within the RSP based on the end timing of the r-TWT SP being extended to the T_{end} timing.

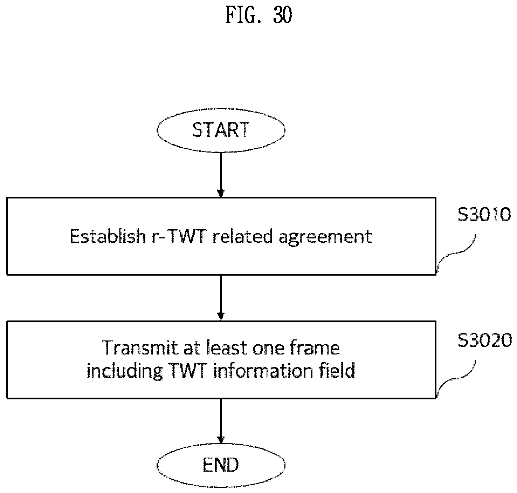

FIG. 30 is a diagram for explaining the operation of an STA supporting rescheduling of r-TWT SP according to an embodiment of the present disclosure.

In FIG. 30, the operation of the STA based on the previously proposed methods (e.g., any one of the above-described embodiments 1, 2, and detailed embodiments thereof, or a combination of one or more (detailed) embodiments) exemplifies.

In step S3010, the STA may establish an r-TWT related agreement.

Here, r-TWT related agreement may be established between AP STAs and non-AP STAs. As an example, as described above, r-TWT related agreement may be established based on the exchange of a TWT request and a TWT response.

Regarding the r-TWT related agreement, if the STA is a non-AP STA, the STA may receive r-TWT SP related allocation information from the AP STA through a management frame such as a beacon frame. Alternatively, if the STA is an AP STA, the STA may transmit r-TWT SP-related allocation information to the non-AP STA through a management frame such as a beacon frame.

In step S3020, the STA may transmit at least one frame including a TWT information field to one or more other STAs.

If the STA is a non-AP STA, one or more other STAs may be AP STAs.

If the STA is an AP STA, one or more other STAs may be one or more non-AP STAs.

Here, the frame including the TWT information field may be a TWT information frame. For example, the at least one frame may include a separate TWT information frame defined for r-TWT and may include an existing TWT information frame.

As in embodiments of the present disclosure, the TWT information field may include an r-TWT related subfield, all TWT subfields, and the next TWT subfield.

Re-scheduling related information for the r-TWT SP (or currently existing r-TWT SP) scheduled for the STA may be indicated based on the r-TWT related subfield, all TWT subfield and the next TWT subfield within the TWT information field transmitted by the STA. s

Here, rescheduling-related information may include one or more of whether the r-TWT SP is suspended, information on the resumption timing for the r-TWT SP, and information on the end timing of the extended r-TWT SP.

Based on the combination of the r-TWT related subfield and all TWT subfields, the target of rescheduling may be indicated/confirmed. For example, a specific combination between the value of the r-TWT related subfield and the value of the all TWT subfield may indicate suspension of all r-TWT SPs scheduled for the STA.

For example, the r-TWT related subfield may indicate whether the rescheduled TWT SP corresponds to the r-TWT SP. As a specific example, the r-TWT related subfield may indicate whether the currently existing or rescheduled TWT SP corresponds to an r-TWT SP or a broadcast TWT SP.

For example, the TWT information field may further include a broadcast TWT ID subfield. If the TWT SP being rescheduled corresponds to an r-TWT SP, the broadcast TWT ID subfield may indicate TWT membership for one or more STAs that support the corresponding r-TWT SP.

Additionally or alternatively, for the same value of all TWT subfields (e.g., set to 1), the value of the next TWT subfield may indicate whether the r-TWT SP is suspend or resume timing information (e.g., resume timing reference). For example, for all TWT subfield set to a value of 1, the next TWT subfield set to a value of 0 may indicate a suspension, and the next TWT subfield set to a value greater than 0 may indicate resume timing information. Here, the resume timing information may correspond to the first r-TWT SP after the next TWT subfield value.

Additionally or alternatively, the TWT information field may further include a subfield (e.g., P2P subfield) indicating the type of r-TWT SP. Here, the type of r-TWT SP may include a first type for UL/DL transmission and reception between an AP STA and a non-AP STA and a second type for P2P transmission and reception between non-AP STAs.

Additionally or alternatively, the TWT information field may further include an extension-related subfield (e.g., restricted TWT SP extension subfield) indicating whether to extend the end timing of the r-TWT SP scheduled for the STA.

In this regard, information related to extension/resumption of r-TWT SP may be indicated based on the value of the corresponding subfield and the value of the next TWT subfield (and the values of all TWT subfields).

For example, if all TWT subfields are set to 1, and the next TWT subfield is set to a value greater than 0, the extension-related subfield set to the first value (e.g., 0 value) may indicate resumption in the first r-TWT SP after the value of the next TWT subfield. On the other hand, if all TWT subfields are set to 1 and the next TWT subfield is set to a value greater than 0, the extension-related subfield set to the second value (e.g., 1 value) may indicate/announce that the end timing is extended to the value of the next TWT subfield. This may be for a case where the corresponding TWT information field is transmitted by an AP STA to a non-AP STA.

For another example, if all TWT subfields are set to 0, and the next TWT subfield is set to a value greater than 0, an extension-related subfield set to a specific value (e.g., a value of 1) may indicate/mean a request to extend the end timing of the r-TWT SP to the value of the next TWT subfield. This may be the case when the corresponding TWT information field is transmitted to the AP STA by a non-AP STA. In this regard, if certain conditions are not met, the request shall be rejected by the AP STA. As an example, if the length of duration for the extended r-TWT SP exceeds the length of duration for the r-TWT SP initially scheduled for the STA, or if at least one of the following cases applies where the extending r-TWT SP overlaps with a subsequently existing TWT SP, the request may be rejected and the AP STA may transmit information on the rejection to the non-AP STA.

In the present disclosure described above, as new TWT information for r-TWT SP, the definition/design of TWT information frame/field containing information related to r-TWT SP and signaling method based on it were explained.

In this regard, the r-TWT information frame in the proposal of the present disclosure may be applied/utilized by defining a new TWT information frame, and additionally or alternatively, it may also be applied/utilized based on the existing TWT information frame.

For example, to indicate/deliver the above-described r-TWT SP related information, a new TWT information frame for restricted TWT may be transmitted and received separately from the existing TWT information frame.

For another example, new TWT information for r-TWT SP may be based on the existing TWT information frame, but may be configured/defined in the format of a new TWT information field. As a specific example, within an existing TWT information frame, a new TWT information field (i.e., additional/extended TWT information field) may be included following the existing TWT information field. That is, separately from the existing TWT information field (e.g., TWT information field format in FIG. 16), the new TWT information field may include subfield(s) related to the r-TWT SP described above in the present disclosure. In this case, information related to the r-TWT SP may be indicated based on a new TWT information field or a combination of the existing TWT information field and the new TWT information field.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [industrial Applicability]

A method proposed by the present disclosure is mainly described based on an example applied to an IEEE 802.11-based system, 5G system, but may be applied to various WLAN or wireless communication systems other than the IEEE 802.11-based system.

## Claims

1. A method performed by a station (STA) in a wireless LAN system, the method includes:
establishing an agreement related to restricted-target wake time (r-TWT); and
transmitting at least one frame including a TWT information field to one or more other STAs,
wherein the TWT information field includes an r-TWT related subfield, an all TWT subfield, and a next TWT subfield, and
wherein re-scheduling related information on a r-TWT service period (r-TWT SP) scheduled for the STA is indicated based on the r-TWT related subfield, the all TWT subfields, and the next TWT subfield.

2. The method of claim 1,
wherein a specific combination between a value of the r-TWT related subfield and a value of all TWT subfields indicates suspension of all r-TWT SPs scheduled for the STA.

3. The method of claim 1,
wherein the r-TWT related subfield indicates whether a rescheduled TWT SP corresponds to a r-TWT SP.

4. The method of claim 3,
wherein the TWT information field further includes a broadcast TWT ID subfield, and
wherein, based on the rescheduled TWT SP corresponding to the r-TWT SP, the broadcast TWT ID subfield indicates TWT membership for one or more STAs supporting the r-TWT SP.

5. The method of claim 1,
wherein, for a same value of the all TWT subfield,
the next TWT subfield set to a value 0 indicates suspension, and
the next TWT subfield set to a value greater than 0 indicates resume timing information.

6. The method of claim 5,
wherein the resume timing information corresponds to a first r-TWT SP after the next TWT subfield value.

7. The method of claim 1,
wherein the TWT information field further includes a subfield indicating a type of r-TWT SP, and
wherein the type of r-TWT SP includes a first type for uplink or downlink transmission and reception between an access point (AP) STA and a non-AP (non-AP) STA, and a second type for P2P transmission and reception between non-AP STAs.

8. The method of claim 1,
wherein the TWT information field further includes an extension-related subfield indicating whether to extend the end timing of the r-TWT SP scheduled for the STA.

9. The method of claim 8,
wherein, based on the next TWT subfield being set to a value greater than 0,
the extension-related subfield set to a first value indicates resumption in a first r-TWT SP after the value of the next TWT subfield, and
the extension-related subfield set to the second value indicates that the end timing is extended to the value of the next TWT subfield.

10. The method of claim 8,
wherein, based on that the STA is a non-AP STA scheduled for r-TWT, and the one or more other STAs are AP STAs,
the extension-related subfield set to a specific value and the next TWT subfield set to a value greater than 0 indicate a request to extend the end timing to the value of the next TWT subfield.

11. The method of claim 10,
wherein whether or not the AP STA rejects the request is determined based on at least one of a first condition or a second condition,
wherein the first condition corresponds to whether a length of duration for an extended r-TWT SP exceeds a length of duration for a r-TWT SP initially scheduled for the STA, and
wherein the second condition corresponds to whether an extended r-TWT SP overlaps with a subsequently located TWT SP.

12. A station (STA) in a wireless local area network (WLAN) system, the STA comprising:
at least one transceiver; and
at least one processor connected to the at least one transceiver,
wherein the at least one processor is configured to:
establish an agreement related to restricted-target wake time (r-TWT); and
transmit at least one frame including a TWT information field to one or more other STAs,
wherein the TWT information field includes an r-TWT related subfield, an all TWT subfield, and a next TWT subfield, and
wherein re-scheduling related information on a r-TWT service period (r-TWT SP) scheduled for the STA is indicated based on the r-TWT related subfield, the all TWT subfields, and the next TWT subfield.

13. A processing device configured to control a station (STA) in a wireless local area network (WLAN) system, the processing device comprising:
at least one processor; and
at least one computer memory operatively coupled to the at least one processor and storing instructions for performing a method according to any one of claims 1 to 11 upon being executed by the at least one processor.

14. At least one non-transitory computer readable medium storing at least one instruction, wherein:
the at least one instruction executed by at least one processor controls a device to performs a method according to any one of claims 1 to 11 in a wireless communication system.
